# EUROPEAN PATENT APPLICATION

(11) **EP 4 736 626 A2**
(43) Date of publication of application: **06.05.2026**
(21) Application number: 25212141.3
(22) Date of filing: 29.10.2025
(51) Int. Cl.: A01D 41/14, A01B 1/00, A01B 69/04, A01C 11/02

(54) **WORK METHOD, WORK PROGRAM, AND WORK SYSTEM**

(30) Priority: 30.10.2024 JP 2024190282
(71) Applicant: Yanmar Holdings Co., Ltd., Osaka-shi, Osaka (JP)
(72) Inventor: NOGUCHI, Takuma, Okayama-shi (JP); NISHII, Yasuto, Okayama-shi (JP); MURAYAMA, Masaaki, Okayama-shi (JP)
(74) Representative: Sekiguchi, Kazuya

(57) **Abstract**

[Problem] Provided are a work method, a work program, and a work system that are capable of appropriately controlling a work implement attached to a work vehicle capable of automatic traveling.

[Solution] A reaping control device 11B executes a process of controlling a height of a harvesting unit based on a height of a ground or a crop in a work area during automatic travel of a combine 1, and a process of switching a harvest height control function that controls the height of the harvesting unit from disabled to enabled when the harvesting unit reaches a first position on a work path away from a target start position of work on the work path by a first predetermined distance in a work direction.

## Description

### TECHNICAL FIELD

The present invention relates to a technique for performing predetermined work using a work implement provided on a work vehicle.

### BACKGROUND ART

In the related art, an automatic traveling system is known in which a work vehicle equipped with a work implement such as a tiller, a ridger, a mower, a rake, or a seeder travels automatically within a field to perform predetermined work (see, for example, Patent Document 1).

### PRIOR ART DOCUMENT

### PATENT DOCUMENT

Patent Document 1: JP 6253678 B2

### SUMMARY OF INVENTION

### TECHNICAL PROBLEM

When work is performed while the work vehicle is caused to automatically travel, it is necessary to appropriately control the work implement, such as by setting the position of the work implement (the working height or the like) to match the work start position, in order to ensure work accuracy.

An object of the present invention is to provide a work method, a work program, and a work system that are capable of appropriately controlling a work implement attached to a work vehicle capable of automatic traveling.

### SOLUTION TO PROBLEM

A work method according to the present invention is a method for harvesting a crop using a harvesting unit provided on a work vehicle. The work method includes: controlling a height of the harvesting unit based on a height of a ground or a crop in a work area during automatic travel of the work vehicle; and switching a harvest height control function that controls the height of the harvesting unit from disabled to enabled when the harvesting unit reaches a first position on a work path away from a target start position of work on the work path by a first predetermined distance in a work direction.

A work method according to the present invention is a method for harvesting a crop using a harvesting unit provided on a work vehicle. The work method includes: controlling a height of the harvesting unit based on a height of a ground or a crop in a work area during automatic travel of the work vehicle; and switching a harvest height control function that controls the height of the harvesting unit from enabled to disabled when the harvesting unit reaches a second position on a work path away from a target end position of work on the work path by a second predetermined distance in an opposite direction to a work direction.

A work program according to the present invention is a program for harvesting a crop using a harvesting unit provided on a work vehicle. The work program is a program for causing one or more processors to execute: controlling a height of the harvesting unit based on a height of a ground or a crop in a work area during automatic travel of the work vehicle; and switching a harvest height control function that controls the height of the harvesting unit from disabled to enabled when the harvesting unit reaches a first position on a work path away from a target start position of work on the work path by a first predetermined distance in a work direction.

A work program according to the present invention is a program for harvesting a crop using a harvesting unit provided on a work vehicle. The work program is a program for causing one or more processors to execute: controlling a height of the harvesting unit based on a height of a ground or a crop in a work area during automatic travel of the work vehicle; and switching a harvest height control function that controls the height of the harvesting unit from enabled to disabled when the harvesting unit reaches a second position on a work path away from a target end position of work on the work path by a second predetermined distance in an opposite direction to a work direction.

A work system according to the present invention is a system for harvesting a crop using a harvesting unit provided on a work vehicle. The work system includes a control processing unit that executes: a process of controlling a height of the harvesting unit based on a height of a ground or a crop in a work area during automatic travel of the work vehicle; and a process of switching a harvest height control function that controls the height of the harvesting unit from disabled to enabled when the harvesting unit reaches a first position on a work path away from a target start position of work on the work path by a first predetermined distance in a work direction.

A work system according to the present invention is a system for harvesting a crop using a harvesting unit provided on a work vehicle. The work system includes a control processing unit that executes: a process of controlling a height of the harvesting unit based on a height of a ground or a crop in a work area during automatic travel of the work vehicle; and a process of switching a harvest height control function that controls the height of the harvesting unit from enabled to disabled when the harvesting unit reaches a second position on a work path away from a target end position of work on the work path by a second predetermined distance in an opposite direction to a work direction.

A work method according to the present invention is a method for planting a planting target using a planting unit provided on a work vehicle. The work method includes: controlling a planting depth of the planting target based on a height of a ground in a work area during automatic travel of the work vehicle; and switching a planting depth control function that controls the planting depth of the planting target from disabled to enabled when the planting unit reaches a first position on a work path away from a target start position of work on the work path by a first predetermined distance in a work direction.

A work method according to the present invention is a method for planting a planting target using a planting unit provided on a work vehicle. The work method includes: controlling a planting depth of the planting target based on a height of a ground in a work area during automatic travel of the work vehicle; and switching a planting depth control function that controls the planting depth of the planting target from enabled to disabled when the planting unit reaches a second position on a work path away from a target end position of work on the work path by a second predetermined distance in an opposite direction to a work direction.

A work program according to the present invention is a program for planting a planting target using a planting unit provided on a work vehicle. The work program is a program for causing one or more processors to execute: controlling a planting depth of the planting target based on a height of a ground in a work area during automatic travel of the work vehicle; and switching a planting depth control function that controls the planting depth of the planting target from disabled to enabled when the planting unit reaches a first position on a work path away from a target start position of work on the work path by a first predetermined distance in a work direction.

A work program according to the present invention is a program for planting a planting target using a planting unit provided on a work vehicle. The work program is a program for causing one or more processors to execute: controlling a planting depth of the planting target based on a height of a ground in a work area during automatic travel of the work vehicle; and switching a planting depth control function that controls the planting depth of the planting target from enabled to disabled when the planting unit reaches a second position on a work path away from a target end position of work on the work path by a second predetermined distance in an opposite direction to a work direction.

A work system according to the present invention is a system for planting a planting target using a planting unit provided on a work vehicle. The work system includes a control processing unit that executes: a process of controlling a planting depth of the planting target based on a height of a ground in a work area during automatic travel of the work vehicle; and a process of switching a planting depth control function that controls the planting depth of the planting target from disabled to enabled when the planting unit reaches a first position on a work path away from a target start position of work on the work path by a first predetermined distance in a work direction.

A work system according to the present invention is a system for planting a planting target using a planting unit provided on a work vehicle. The work system includes a control processing unit that executes: a process of controlling a planting depth of the planting target based on a height of a ground in a work area during automatic travel of the work vehicle; and a process of switching a planting depth control function that controls the planting depth of the planting target from enabled to disabled when the planting unit reaches a second position on a work path away from a target end position of work on the work path by a second predetermined distance in an opposite direction to a work direction.

### ADVANTAGEOUS EFFECTS OF INVENTION

According to the present invention, it is possible to provide a work method, a work program, and a work system that are capable of appropriately controlling a work implement attached to a work vehicle capable of automatic traveling.

### BRIEF DESCRIPTION OF DRAWINGS

Fig. 1 is a block diagram showing a configuration of an automatic traveling system according to a first embodiment of the present invention;
Fig. 2 is an external side view showing a configuration of a combine according to the first embodiment of the present invention;
Fig. 3 is an external top view showing a configuration of the combine according to the first embodiment of the present invention;
Fig. 4 is a diagram showing an example of a field and a target path according to the first embodiment of the present invention;
Fig. 5 is a diagram showing an example of a position (a lowest position) of a reaping unit of the combine according to the first embodiment of the present invention;
Fig. 6 is a diagram showing an example of a position (a highest position) of the reaping unit of the combine according to the first embodiment of the present invention;
Fig. 7 is a diagram showing an example of a position (an intermediate position) of the reaping unit of the combine according to the first embodiment of the present invention;
Fig. 8 is a diagram showing an example of control information for controlling an operation of the reaping unit of the combine according to the first embodiment of the present invention;
Fig. 9 is a diagram showing an example of a traveling method of the combine according to the first embodiment of the present invention;
Fig. 10 is a diagram showing an example of a traveling method of the combine according to the first embodiment of the present invention;
Fig. 11 is a diagram showing an example of a menu screen displayed on an operation terminal according to the first embodiment of the present invention;
Fig. 12 is a flowchart showing an example of a procedure of automatic traveling processing executed by the automatic traveling system according to the first embodiment of the present invention;
Fig. 13 is a flowchart showing an example of the procedure of automatic traveling processing executed by the automatic traveling system according to the first embodiment of the present invention;
Fig. 14 is a block diagram showing a configuration of an automatic traveling system according to a second embodiment of the present invention;
Fig. 15 is an external perspective view showing a configuration of a transplanter according to the second embodiment of the present invention;
Fig. 16 is a diagram showing an example of control information for controlling an operation of a planting unit of the transplanter according to the second embodiment of the present invention;
Fig. 17 is a diagram showing an example of a traveling method of the transplanter according to the second embodiment of the present invention;
Fig. 18 is a diagram showing an example of a traveling method of the transplanter according to the second embodiment of the present invention;
Fig. 19 is a flowchart showing an example of a procedure of automatic traveling processing executed by the automatic traveling system according to the second embodiment of the present invention; and
Fig. 20 is a flowchart showing an example of the procedure of automatic traveling processing executed by the automatic traveling system according to the second embodiment of the present invention.

### DESCRIPTION OF EMBODIMENTS

The following embodiments are embodied examples of the present invention and do not limit the technical scope of the present invention.

### [First Embodiment]

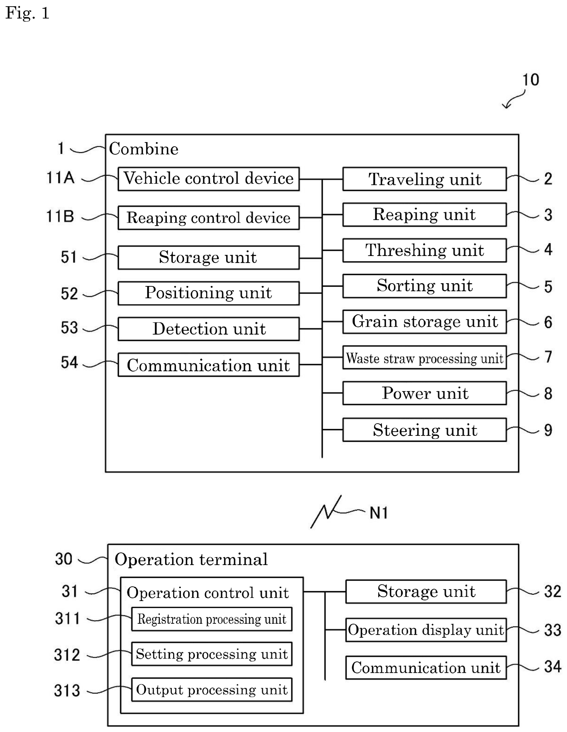

An automatic traveling system according to the present invention includes a work vehicle and an operation terminal. In a first embodiment, a combine is taken as an example of a work vehicle. As shown in Fig. 1, an automatic traveling system 10 according to the first embodiment includes a combine 1 and an operation terminal 30. The combine 1 and the operation terminal 30 can communicate with each other via a communication network N1. For example, the combine 1 and the operation terminal 30 can communicate with each other via a mobile phone network, a packet network, or a wireless LAN. The automatic traveling system 10 is a system that causes the combine 1 to travel automatically within a field F.

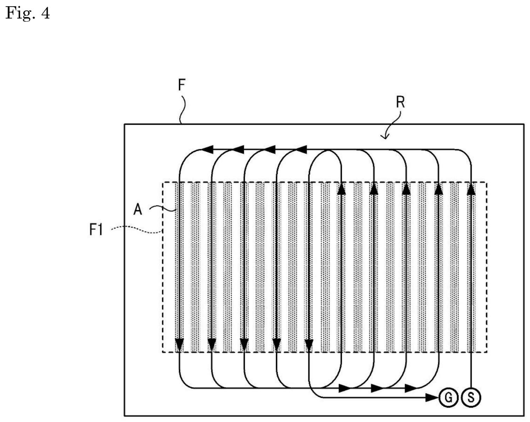

The combine 1 is configured to be able to automatically travel in a field F (see Fig. 4) along a preset target path R. In addition, the combine 1 can perform predetermined work while automatically traveling within the field F. For example, the combine 1 performs predetermined work while automatically traveling along a target path R that is set in advance in the field F based on position information of the current position of the combine 1 calculated by a positioning unit 52. In the present embodiment, the combine 1 includes a harvesting unit that harvests crops, and performs harvesting work while traveling automatically.

For example, as shown in Fig. 4, the combine 1 harvests crops planted in the field F while automatically traveling along a target path R that is set in advance in the field F. In a work area F1 (a harvesting area) of the field F, a plurality of rows of ridges A have been formed by making ridges in the soil, and crops (such as soybeans) are planted on each row of ridges A. The target path R includes linear work paths set within the work area F1 and movement paths (non-work paths) connecting the work paths. In the field F, a travel start position S where automatic travel starts and a travel end position G where automatic travel ends are set.

For example, the combine 1 starts traveling from the travel start position S, travels along the movement path, enters the work area F1, and performs harvesting work while traveling along the first work path. After completing the harvesting work on the first work path, the combine 1 travels along the movement path to move to the second work path and performs the harvesting work. The combine 1 performs harvesting work within the work area F1 by repeating harvesting work on the work path and traveling on the movement path. When the combine 1 has completed the harvesting work on all the work paths within the work area F1, the combine 1 travels along the movement path to move to the travel end position G. In this way, the combine 1 automatically travels along the target path R, and performs harvesting work along each work path in sequence.

The operation terminal 30 is a portable terminal capable of remotely operating the combine 1, and includes, for example, a tablet terminal, a laptop personal computer, a smartphone, or the like. An operator can use the operation terminal 30 to perform setting operations for various setting items. The operation terminal 30 also displays information such as a work status (a harvesting status and the like) and a traveling status of the combine 1 during automatic traveling. The operator can ascertain the work status and the traveling status on the operation terminal 30.

### [Combine 1]

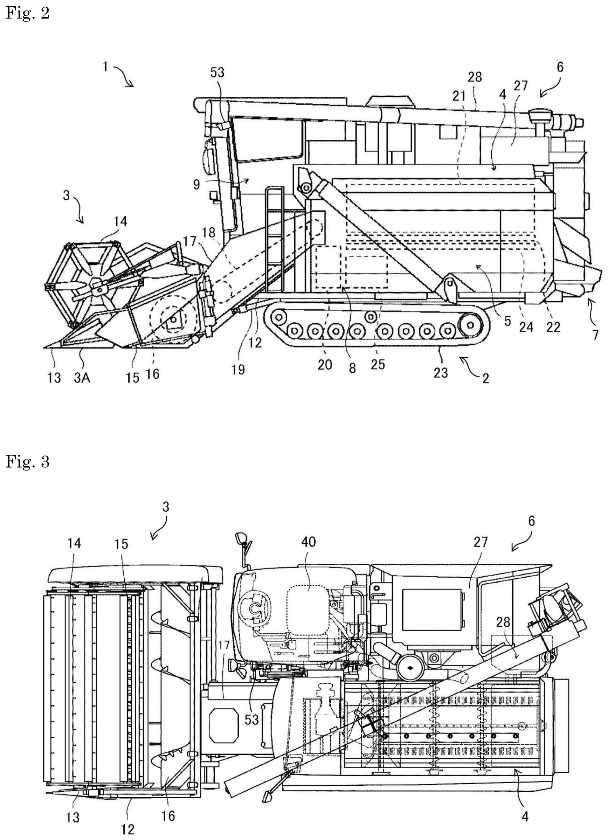

Fig. 2 shows an external view of the combine 1 as seen from the side, and Fig. 3 shows an external view of the combine 1 as seen from above. As shown in Figs. 1 to 3, the combine 1 includes a traveling unit 2, a reaping unit 3, a threshing unit 4, a sorting unit 5, a grain storage unit 6, a waste straw processing unit 7, a power unit 8, a steering unit 9, a vehicle control device 11A, a reaping control device 11B, a storage unit 51, a positioning unit 52, a detection unit 53, a communication unit 54, and the like. The combine 1 travels on the traveling unit 2, cuts grain stalks on the reaping unit 3, threshes the cut grain stalks on the threshing unit 4, and sorts the grains in the sorting unit 5 and stores them in the grain storage unit 6. In addition, the combine 1 processes the waste straw after threshing in the waste straw processing unit 7. The combine 1 drives the traveling unit 2, the reaping unit 3, the threshing unit 4, the sorting unit 5, the grain storage unit 6, and the waste straw processing unit 7 using power supplied by the power unit 8.

The traveling unit 2 is provided below a machine body frame 12, and includes a pair of left and right crawler-type traveling devices 23 and a transmission (not shown). The traveling unit 2 rotates the crawlers of the crawler-type traveling device 23 using power (for example, rotational power) transmitted from an engine 20 of the power unit 8, causing the combine 1 to travel in a forward-backward direction and turn in a left-right direction. The transmission transmits the power (the rotational power) of the power unit 8 to the crawler-type traveling device 23, and is also capable of changing the speed of the rotational power.

The reaping unit 3 is a work implement that performs work on the field F that is the work target, is provided in front of the traveling unit 2, and reaps grain stalks of a predetermined reaping width in the work area F1 of the field F (an unreaped area). The reaping unit 3 is an example of a harvesting unit of the present invention. The reaping unit 3 includes a divider 13, a raking reel 14, a cutting blade 15, a raking auger 16, a feeder house 17, and a transport conveyor 18. The reaping unit 3 also includes a rotation detection unit (not shown) that detects the rotation speed (the working speed) of the rotation work for performing the reaping work. The rotation detection unit includes a rotation sensor that detects, for example, the rotation speed of the raking reel 14, the rotation speed of the raking auger 16, the rotation speed of the transport conveyor 18, and the like. Further, the driving force of the engine 20 is transmitted to the reaping unit 3 via a transmission connected to a power transmission mechanism (such as a transmission belt, not shown).

The divider 13 is provided to protrude forward from the left and right front ends of the reaping unit 3, and guides the grain stalks in the unreaped area within the reaping width. The raking reel 14 is disposed behind the divider 13 and is rotatably provided around a rotation axis extending in the left-right direction. The raking reel 14 rakes in the tip side of the grain stalk while lifting the grain stalk by rotationally driving to assist in the reaping of the grain stalk guided by the divider 13. The cutting blade 15 is disposed below the raking reel 14 and cuts the base side of the grain stalks raked in by the raking reel 14 to reap the grain stalks.

The raking auger 16 is disposed behind the raking reel 14 and the cutting blade 15, and is rotatably provided around a rotation axis extending in the left-right direction. The raking auger 16 is driven to rotate, thereby raking in the grain stalks cut by the cutting blade 15 and transporting them rearward.

The feeder house 17 extends forward from the machine body frame 12, is disposed behind the raking auger 16, and is supported on the machine body frame 12 to be able to move up and down. Furthermore, as the feeder house 17 moves up and down, the divider 13, the raking reel 14, the cutting blade 15, and the raking auger 16 move up and down, that is, the reaping unit 3 moves up and down.

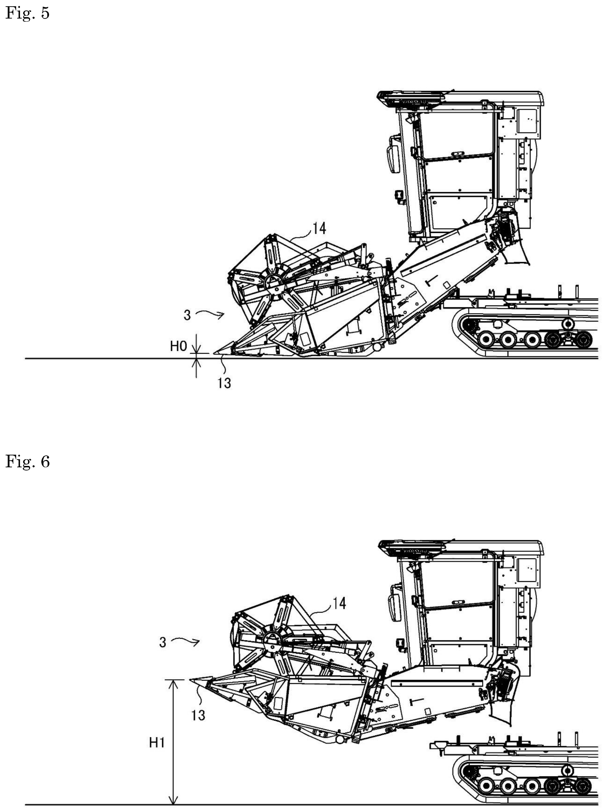

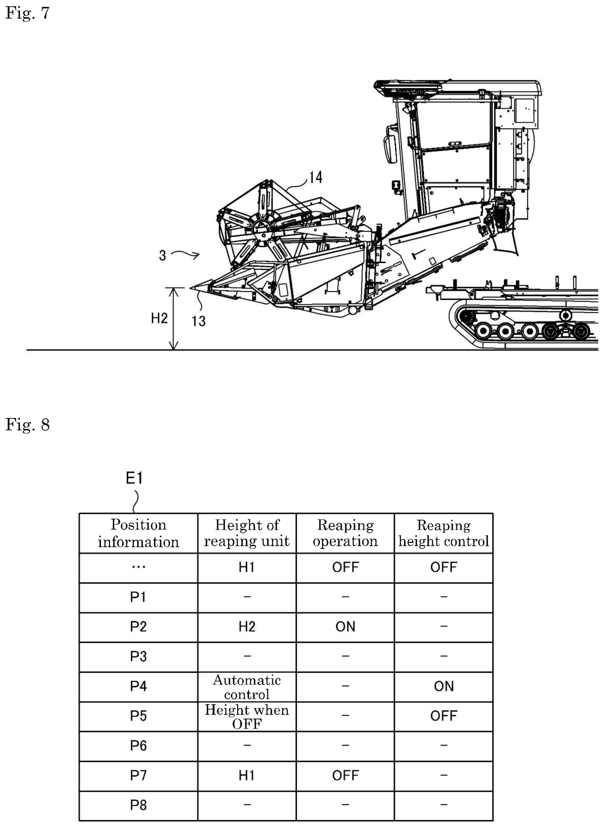

The combine 1 is equipped with a raising/lowering device 19 on the machine body frame 12 that raises and lowers the feeder house 17 and thereby raises and lowers the reaping unit 3, thereby raising and lowering the reaping unit 3 between a working position and a non-working position (see Figs. 5 to 7). Fig. 5 shows a state in which the reaping unit 3 is set to a lowest position (a height H0), Fig. 6 shows a state in which the reaping unit 3 is set to a highest position (a height H1), and Fig. 7 shows a state in which the reaping unit 3 is set to an intermediate position (a height H2). The raising/lowering device 19 includes, for example, a hydraulic cylinder or the like that is operated by receiving power from the engine 20.

The transport conveyor 18 is rotatably provided within the feeder house 17. The transport conveyor 18 is driven to rotate, thereby transporting the grain stalks transported into the feeder house 17 by the raking auger 16 further rearward to the threshing unit 4.

The threshing unit 4 is provided behind the feeder house 17 of the reaping unit 3, and threshes the grain stalks transported from the feeder house 17. The threshing unit 4 includes a threshing drum 21 and a receiving net 22. The threshing drum 21 threshes grains from the grain stalks transported from the feeder house 17 and transports the threshed grain stalks, that is, waste straw, to the waste straw processing unit 7. The receiving net 22 supports the grain stalks transported by the threshing drum 21 and sieves the grains to allow the grains to fall.

The sorting unit 5 is provided below the threshing unit 4. The sorting unit 5 includes a swing sorting device 24, an air blow sorting device 25, a grain transport device (not shown), and a straw chip discharge device (not shown). The swing sorting device 24 sifts the threshed material that has fallen from the threshing unit 4 to sort it into grains, straw chips, and the like. The air blow sorting device 25 further sorts the threshed material that has fallen from the threshing unit 4 and the threshed material sorted by the swing sorting device 24 into grains, straw chips, and the like by blowing air. The grain transport device transports the grains sorted by the swing sorting device 24 and the air blow sorting device 25 to the grain storage unit 6. The straw chip discharge device discharges straw chips and the like other than the grains sorted by the swing sorting device 24 and the air blow sorting device 25 outside the machine.

The grain storage unit 6 is provided on the right side of the threshing unit 4. The grain storage unit 6 includes a grain storage tank (a grain tank) 27 and a grain discharge device 28. The grain storage tank 27 stores the grains (for example, soybeans) transported from the sorting unit 5. The grain discharge device 28 is configured with a discharge auger and the like, performs grain discharge work, and discharges the grains stored in the grain storage tank 27 onto the transport vehicle at a preset discharge position.

The waste straw processing unit 7 is provided behind the threshing unit 4. The waste straw processing unit 7 includes, for example, a waste straw transport device (not shown) and a waste straw cutting device (not shown). The waste straw processing unit 7 transports the waste straw transported from the threshing unit 4 to a waste straw cutting device using a waste straw transport device, and after being cut by the waste straw cutting device, discharges the waste straw to the rear of the combine 1.

The power unit 8 is provided above the traveling unit 2 and below the grain storage unit 6. The power unit 8 includes an engine 20 that generates rotational power. The power unit 8 transmits the rotational power generated by the engine 20 to the traveling unit 2, the reaping unit 3, the threshing unit 4, the sorting unit 5, the grain storage unit 6, and the waste straw processing unit 7. The combine 1 also includes a fuel tank that stores fuel to be supplied to the engine 20 of the power unit 8.

The steering unit 9 is provided above the power unit 8. The steering unit 9 is provided around a driver's seat which is a seat 40 where the operator sits, with operating tools for operating the traveling of the combine 1, such as a steering wheel for instructing the turning of the machine body of the combine 1, a main shift lever and a sub-shift lever for instructing changes in the forward and backward speed of the combine 1, and the like. The manual travel of the combine 1 is executed by the traveling unit 2, which receives operations of the steering wheel of the steering unit 9, the main shift lever, and the sub-shift lever. The steering unit 9 also includes mechanisms for operating the reaping work by the reaping unit 3, the threshing work by the threshing unit 4, the discharge work by the grain discharge device 28 of the grain storage unit 6, and the like.

The positioning unit 52 acquires the vehicle position of the combine 1 using a satellite positioning system such as a GPS. For example, the positioning unit 52 receives a positioning signal from a positioning satellite via a positioning antenna, and acquires position information of the positioning unit 52, that is, the vehicle position of the combine 1 (measurement point data), based on the positioning signal. The positioning unit 52 may include a quantum compass instead of a positioning antenna.

The communication unit 54 is a communication interface for connecting the combine 1 to the communication network N1 in a wired or wireless manner and for executing data communication according to a predetermined communication protocol with an external device such as the operation terminal 30 via the communication network N1.

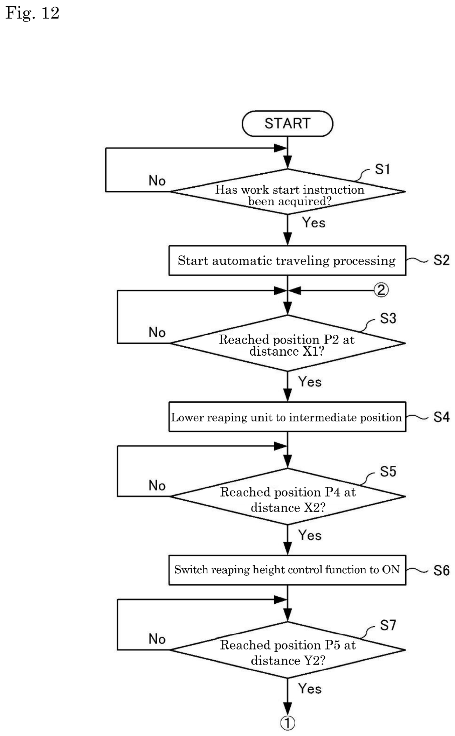

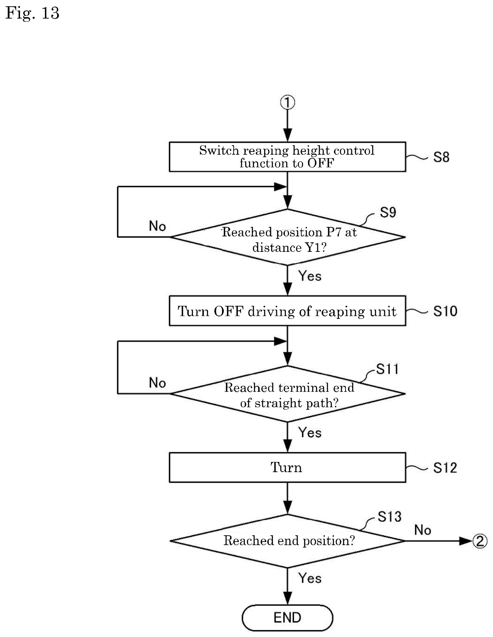

The storage unit 51 is a non-volatile storage unit such as a hard disk drive (HDD), a solid state drive (SSD), or a flash memory that stores various types of information. The storage unit 51 stores a control program such as an automatic traveling program for causing the control device 11 to execute automatic traveling processing (see Figs. 12 and 13) to be described later. For example, the automatic traveling program is non-temporarily recorded in a computer-readable recording medium such as a flash ROM, an EEPROM, a CD, or a DVD, and is read by a predetermined reading device (not shown) and stored in the storage unit 51. Note that the automatic traveling program may be downloaded from a server (not shown) to the combine 1 via a communication network N1 and be stored in the storage unit 51. Furthermore, the storage unit 51 stores various types of setting information acquired from the operation terminal 30.

The detection unit 53 is a sensor that detects a detection target within a predetermined detection range using infrared rays, ultrasonic waves, or the like. For example, the detection unit 53 may be a LiDAR sensor (a distance sensor) that can measure the distance to an object to be measured (a detection target) in three dimensions using a laser, or may be a sonar sensor having a plurality of sonars that can measure the distance to the object to be measured using ultrasonic waves. The detection unit 53 is disposed behind the reaping unit 3 in a direction of travel, and is disposed at the top and center front of the machine body of the combine 1. The detection unit 53 may be disposed at the front and rear of the machine body of the combine 1, or at each of the front, rear, left and right parts of the machine body of the combine 1.

The detection unit 53 is configured to be able to detect a detection target (for example, a person, an obstacle such as an object) within a predetermined detection range that is set in advance. For example, it is possible to set an area (a detection range) to be monitored for the detection unit 53 in order to control the traveling of the combine 1. For example, the detection range includes a stopping area closest to the combine 1, a deceleration area ahead of the stopping area, and a notification area further ahead of the deceleration area. For example, the stopping area is set to a range of approximately 2 m ahead of the combine 1, the deceleration area is set to a range of approximately 6 m ahead of the stopping area, and the notification area is set to a range of approximately 2 m ahead of the deceleration area. The range of each area may be set according to the vehicle speed of the combine 1.

The detection unit 53 transmits the measurement information (the detection information) to the control device 11. The control device 11 detects the detection target based on the measurement information acquired from the detection unit 53 and specifies the position of the detection target. When the combine 1 detects a detection target in a notification area during automatic travel of the combine 1, the control device 11 issues an alarm to the outside. Furthermore, when the combine 1 detects a detection target in a deceleration area during automatic travel of the combine 1, the control device 11 decelerates the combine 1. Furthermore, when the combine 1 detects a detection target in a stopping area during automatic travel of the combine 1, the control device 11 stops the combine 1. The control device 11 may output, to the operation terminal 30, position information indicating the position of the specified detection target.

As another embodiment, the detection unit 53 may include a camera. For example, the detection unit 53 performs image analysis on a captured image obtained by capturing an image in front of the combine 1 to detect the detection target. Furthermore, the detection unit 53 may discriminate a person, an object, a grain stalk, and the like, and the control device 11 may perform notification processing, deceleration processing, stop processing, and the like according to a result of the discrimination. As another embodiment, the detection unit 53 may include a LiDAR sensor and a camera. In this case, the detection unit 53 detects the detection target based on the captured image and the distance.

Each of the vehicle control device 11A and the reaping control device 11B includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (a work area) for various types of processing executed by the CPU. Then, the vehicle control device 11A controls the combine 1 by executing, with the CPU, various control programs stored in advance in the ROM or the storage unit 51. The reaping control device 11B controls the reaping unit 3 by executing, with the CPU, various control programs stored in advance in the ROM or the storage unit 51.

The vehicle control device 11A controls the operation of the combine 1 in response to various user operations on the combine 1. Furthermore, the vehicle control device 11A executes the automatic traveling processing of the combine 1 based on the current position of the combine 1 calculated by the positioning unit 52 and a target path R that is set in advance.

The vehicle control device 11A functions as the various processing units by executing various types of processing according to the automatic traveling program with the CPU. In addition, some or all of the processing units may include an electronic circuit. Note that, the automatic traveling program may be a program for causing a plurality of processors to function as the processing unit.

Specifically, when the vehicle control device 11A acquires a travel start instruction from the operation terminal 30, the vehicle control device 11A causes the combine 1 to start automatic travel. For example, when the operator presses a start button on the operation screen of the operation terminal 30, the operation terminal 30 outputs a travel start instruction to the combine 1. When the vehicle control device 11A acquires a travel start instruction from the operation terminal 30, the vehicle control device 11A starts automatic traveling of the combine 1 along the target path R. Accordingly, for example, the combine 1 starts automatic traveling in the field F along the target path R (see Fig. 4).

The reaping control device 11B controls the operation of the reaping unit 3. Specifically, the reaping control device 11B controls the height of the reaping unit 3 based on the height of the ground or the crop in the work area F1 while the combine 1 is traveling automatically. In addition, the reaping control device 11B switches a reaping height control function (an example of a harvest height control function of the present invention) that controls the height of the reaping unit 3 from disabled to enabled when the reaping unit 3 reaches a first position on the work path away from the target start position of the work on the work path by a first predetermined distance in a work direction.

Specifically, the reaping control device 11B controls the height of the reaping unit 3 based on the undulations of the field F, the height of the ridges A, and the like. For example, the reaping control device 11B detects the height of the ridge A using a sensor 3A (see Fig. 2) provided on the reaping unit 3, and controls the height of the reaping unit 3 according to the height of the ridge A.

The reaping control device 11B also controls the operation of the reaping unit 3 based on control information E1 (see Fig. 8) generated in the operation terminal 30. Furthermore, the reaping control device 11B causes the reaping unit 3 to execute a reaping operation based on the current position of the combine 1 calculated by the positioning unit 52 and the control information E1. Accordingly, the combine 1 performs reaping work in the field F based on the control information E1 while automatically traveling along the target path R. In the control information E1, information such as the height of the reaping unit 3, the timing for switching the reaping operation, and the timing for switching the reaping height control function between enabling and disabling (ON/OFF) is registered in association with position information. The reaping control device 11B is an example of a control processing unit of the present invention.

Furthermore, when the vehicle control device 11A and the reaping control device 11B acquire a travel stop instruction from the operation terminal 30, the vehicle control device 11A and the reaping control device 11B stop the automatic traveling and reaping work of the combine 1. For example, when the operator presses a stop button on the operation screen of the operation terminal 30, the operation terminal 30 outputs a travel stop instruction to the combine 1.

While the combine 1 is traveling automatically, the reaping control device 11B raises and lowers the reaping unit 3, controls the driving of the reaping unit 3 (or the power transmission mechanism) to execute or stop the reaping operation, and turns the reaping height control function of the reaping unit 3 ON/OFF based on the position of the combine 1 and the control information E1 (see Fig. 8) set on the target path R.

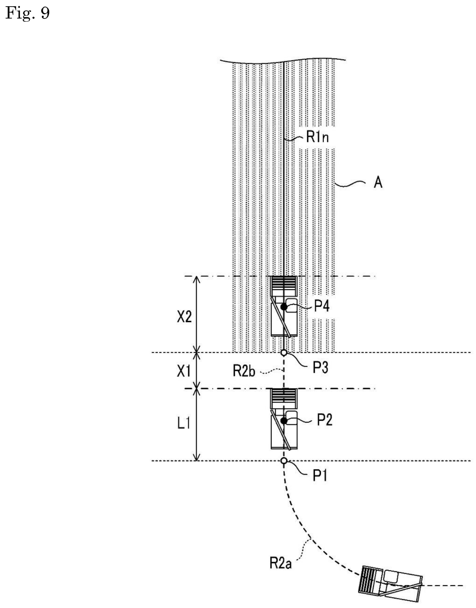

Fig. 9 shows a specific example of a work method when performing reaping work on a predetermined work path R1n. Fig. 9 shows the work path R1n and non-work paths (a turning path R2a and a straight path R2b) connected to a start end P3 of the work path R1n. After traveling along the turning path R2a and the straight path R2b, the combine 1 enters the work path R1n and starts reaping work.

For example, the reaping control device 11B sets (maintains) the reaping unit 3 to a non-working position (for example, the highest position (the height H1 in Fig. 6)) in the turning path R2a and a section L1 from a start end P1 of the straight path R2b to a predetermined position (a position a distance X1 before the start end P3) just before the start end P3 (an example of a target start position of the present invention) of the work path R1n. Furthermore, the reaping control device 11B sets (maintains) the reaping height control function to OFF in the turning path R2a and the section L1 (see Fig. 8). At the start end P1, the vehicle control device 11A may set the traveling speed (the vehicle speed) of the combine 1 to the vehicle speed (the working vehicle speed) during the reaping work.

The reaping control device 11B sets the reaping unit 3 to the intermediate position (the height H2 in Fig. 7) one step lower than the highest position (the height H1 in Fig. 6) at the timing when the combine 1 reaches a position P2 where the distance between the reaping unit 3 (for example, the front end of the reaping unit 3) and the start end P3 is X1. Specifically, the reaping control device 11B outputs a lowering instruction to the raising/lowering device 19 (see Fig. 2) such that the reaping unit 3 is at the intermediate position (the height H2) at the point in time when the combine 1 reaches the position P2. The reaping control device 11B may output a lowering instruction to the raising/lowering device 19 such that the reaping unit 3 is at the intermediate position at the point in time before the combine 1 reaches the position P2.

The height H2 of the intermediate position is a height between the height H0 of the lowest position (see Fig. 5) and the height H1 of the highest position (see Fig. 6), and is higher than the ridge A. Furthermore, the height H2 may be set by the operator or may be automatically set by the automatic traveling system 10. For example, the operator may check the height of the ridge A and input a height H2 that is higher than the ridge A. Furthermore, for example, the reaping control device 11B may acquire height information of the ridge A from work information (a work history) during ridge-making work, and set a height H2 that is higher than the ridge A.

Furthermore, when the combine 1 reaches the position P2 and the reaping unit 3 descends to the intermediate position, the reaping control device 11B switches the drive (the power transmission mechanism) of the reaping unit 3 from OFF to ON (see Fig. 8). That is, when the reaping unit 3 descends to the intermediate position, the reaping control device 11B instructs the reaping unit 3 to start the reaping operation (the rotation operation of the raking reel 14). The timing for starting the driving of the reaping unit 3 is not limited to the timing when the combine 1 reaches the position P2, but may be any timing before the reaping unit 3 reaches the start end P3 of the work path R1n. Furthermore, the timing when the driving of the reaping unit 3 starts may be after the reaping unit 3 enters the work path R1n.

Here, since the combine 1 travels along the straight path R2b without stopping, when the reaping control device 11B switches the reaping operation from OFF to ON at the timing when the combine 1 reaches the position P2, the rotation operation of the raking reel 14 is actually started at a point closer to the start end P3 than the distance X1. That is, the rotation operation of the raking reel 14 is started after a predetermined time has elapsed since the reaping control device 11B switched the reaping operation to ON. Therefore, in order to ensure that the raking reel 14 performs reliably the rotation operation at the start end P3 of the work path R1n, it is desirable that the rotation operation of the raking reel 14 is started at the start end P3 or at a position before the start end P3. Therefore, the distance X1 is set such that the time required from when the reaping operation is switched to ON at the position P2 until the raking reel 14 starts to rotate is shorter than the travel time until the combine 1 reaches the start end P3 from the position P2. In this way, the distance X1 is set such that the reaping operation on the reaping target (the grain stalk) is started at the start end of the reaping target.

The vehicle control device 11A may set the vehicle speed of the combine 1 in the section where the combine 1 travels from the position P2 to the start end P3 to be slower than the vehicle speed in the section L1. Accordingly, since the raking reel 14 is reliably rotated at the start end P3, the reaping operation can be reliably started from the start end of the reaping target.

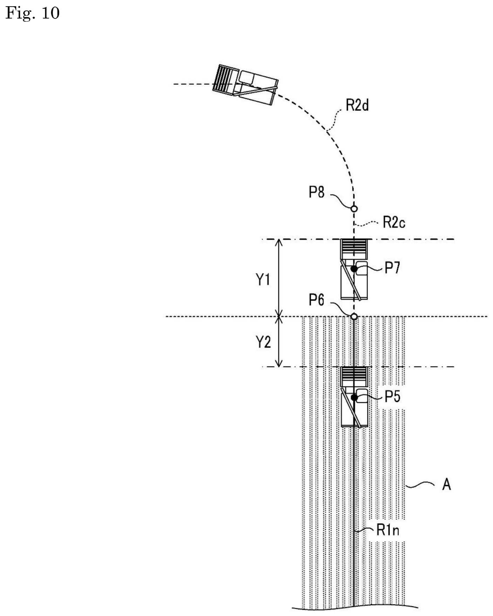

When the combine 1 reaches the start end P3, the vehicle control device 11A causes the combine 1 to travel straight along the work path R1n toward a terminal end P6 (see Fig. 10). The combine 1 performs the reaping work of the reaping target (the grain stalks) planted in the ridge A while automatically traveling along the work path R1n with the reaping unit 3 maintained at an intermediate position.

When the combine 1 travels along the work path R1n and reaches a predetermined position P4 (the position of the reaping unit 3 reaches a position at a distance X2 that is set in advance from the start end P3), the reaping control device 11B switches the reaping height control function from OFF to ON (see Fig. 8). That is, the reaping control device 11B switches the reaping height control function from OFF to ON when the reaping unit 3 reaches a position (an example of a first position according to the present invention) on the work path R1n away from the start end P3 by the distance X2 (an example of a first predetermined distance according to the present invention) in the work direction.

Specifically, the reaping control device 11B instructs the raising/lowering device 19 to start an operation of automatically changing the height of the reaping unit 3. When the reaping height control function is switched to ON, the raising/lowering device 19 detects unevenness in the soil (such as the ridge A) and moves the reaping unit 3 to a position according to the height of the unevenness in the soil (the height of the ridge A). Here, when the reaping height control function is OFF, the reaping unit 3 is maintained at a predetermined height that has been set in advance. That is, the reaping control device 11B sets the height of the reaping unit 3 to the predetermined height, here the height H2 of the intermediate position (see Fig. 7), up to a position away from the start end P3 by the distance X2. Accordingly, the height of the reaping unit 3 is maintained at the height H2 of the intermediate position in the section from the position P2 on the front side of the start end P3 by the distance X1 to the position P4 on the work direction side of the start end P3 by the distance X2. The reaping unit 3 performs reaping work while being maintained at the intermediate position (the height H2) until the combine 1 reaches the position P4.

When the combine 1 reaches the position P4 and the reaping height control function is switched to ON, the raising/lowering device 19 lowers the reaping unit 3 to near the upper surface of the ridge A based on the detection result of the sensor 3A. When the reaping height control function is ON, the raising/lowering device 19 changes the height of the reaping unit 3 as needed in accordance with the detection result of the ridge A being detected. As another embodiment, the raising/lowering device 19 may move the reaping unit 3 to a height that is set in advance depending on the position of the combine 1 when the reaping height control function is ON.

The distance X2 is set on the work direction side of the work path R1n with respect to the start end P3. Furthermore, the distance X2 is the distance from the start end P3 to the reaping unit 3 when the current position of the combine 1 is the position P4. The distance X2 may be preset by the operator. Furthermore, the automatic traveling system 10 may acquire position information of the reaping target (for example, grain stalks) and automatically set the distance X2 based on the position information. For example, the distance X2 is the shortest distance required for the combine 1 to start reaping work from the start end P3 and for the vehicle speed to stabilize.

The combine 1 performs reaping work while automatically traveling from the position P4 with the reaping height control function in an ON state.

Fig. 10 shows the work path R1n and non-work paths (a straight path R2c and a turning path R2d) connected to the terminal end P6 of the work path R1n. When the combine 1 ends the reaping work on the work path R1n, the combine 1 travels along the straight path R2c and the turning path R2d to move to the next work path (not shown).

For example, when the combine 1 approaches the terminal end P6 of the work path R1n (an example of a target end position of the present invention), the reaping control device 11B switches the reaping height control function from ON to OFF at a position (an example of a second position of the present invention) away from the terminal end P6 by a distance Y2 (an example of a second predetermined distance of the present invention) in the opposite direction to the work direction (see Fig. 8). Specifically, the reaping control device 11B switches the reaping height control function from ON to OFF when the reaping unit 3 reaches a position on the work path R1n away from the terminal end P6 by the distance Y2 in the opposite direction to the work direction, that is, when the combine 1 reaches a position P5.

Furthermore, when the reaping control device 11B switches the reaping height control function to OFF, the reaping control device 11B sets (maintains) the height of the reaping unit 3 to the height when the reaping unit 3 reaches the position at the distance Y2 (when the combine 1 reaches the position P5). For example, when the height of the reaping unit 3 when it reaches the position at the distance Y2 is the height H0 (see Fig. 6), the reaping control device 11B maintains the height of the reaping unit 3 at H0. The reaping control device 11B causes the reaping unit 3 to execute reaping work up to the terminal end P6 while maintaining the height of the reaping unit 3.

The distance Y2 is set on the opposite side of the terminal end P6 from the work direction of the work path R1n. Furthermore, the distance Y2 is the distance from the terminal end P6 to the reaping unit 3 (the front end of the reaping unit 3) when the current position of the combine 1 is the position P5. The distance Y2 may be preset by the operator. Furthermore, the automatic traveling system 10 may acquire position information of the reaping target (for example, grain stalks) and automatically set the distance Y2 based on the position information.

From the position P5, the combine 1 continues automatic traveling and reaping work with the reaping height control function in an OFF state. Thereafter, when the combine 1 reaches the terminal end P6 of the work path R1n, the combine 1 continues automatic traveling and the operation of the reaping unit 3 (the rotation operation of the raking reel 14) up to a position P7 on the straight path R2c. The position P7 is the position of the combine 1 when the distance from the terminal end P6 to the reaping unit 3 is a distance Y1. The distance Y1 is set on the traveling direction side of the terminal end P6.

At the timing when the combine 1 reaches the position P7 where the distance between the reaping unit 3 and the terminal end P6 is Y1, the reaping control device 11B switches the driving of the reaping unit 3 from ON to OFF (see Fig. 8). Specifically, the reaping control device 11B turns off the power transmission mechanism to stop the reaping operation. That is, the reaping control device 11B switches the operation of the reaping unit 3 from ON to OFF when the reaping unit 3 reaches a position (an example of a fourth position according to the present invention) on the straight path R2c away from the terminal end P6 by the distance Y1 (an example of a third predetermined distance according to the present invention) in the work direction.

Furthermore, when the combine 1 reaches the position P7, the reaping control device 11B raises the reaping unit 3 to the highest position (the height H1 in Fig. 6). Specifically, the reaping control device 11B outputs a raising instruction to the raising/lowering device 19 (see Fig. 2) such that the reaping unit 3 is at the highest position (the height H1) at the point in time before the combine 1 reaches a terminal end P8 of the straight path R2c (the start end of the turning path R2d). The vehicle control device 11A causes the combine 1 to automatically travel along the straight path R2c to the terminal end P8 of the straight path R2c (the start end of the turning path R2d). The reaping control device 11B may output a raising instruction to the raising/lowering device 19 such that the reaping unit 3 is at the highest position (the height H1) at the point in time when the combine 1 reaches the position P7 or at an earlier point in time. As another embodiment, the vehicle control device 11A may temporarily stop the combine 1 at the position P8 until the reaping unit 3 reaches the highest position.

When the combine 1 reaches the position P8, the vehicle control device 11A causes the combine 1 to automatically travel (turn) along the turning path R2d. The reaping control device 11B and the vehicle control device 11A execute the above-described processing (see Figs. 8 to 10) for each work path.

### [Operation terminal 30]

As shown in Fig. 1, the operation terminal 30 is an information processing apparatus including an operation control unit 31, a storage unit 32, the operation display unit 33, a communication unit 34, and the like. The operation terminal 30 may include a portable terminal such as a tablet terminal or a smartphone.

The communication unit 34 is a communication interface for connecting the operation terminal 30 to the communication network N1 in a wired or wireless manner and for executing data communication according to a predetermined communication protocol with an external device such as one or more combines 1 via the communication network N1.

The operation display unit 33 is a user interface including a display unit such as a liquid crystal display or an organic EL display that displays various types of information, and an operation unit such as a touch panel, a mouse, or a keyboard that receives an operation. The operator can operate the operation unit to register various types of information (such as work vehicle information, field information, and work information, which will be described later) on the operation screen displayed on the display unit. In addition, the operator can operate the operation unit to issue an automatic traveling instruction to the combine 1. In addition, the operator can ascertain the traveling state of the combine 1 traveling automatically along the target path R within the field F from the travel trajectory displayed on the operation terminal 30 at a location away from the combine 1.

The storage unit 32 is a non-volatile storage unit such as an HDD, an SSD, or a flash memory that stores various types of information. The storage unit 32 stores a control program for causing the operation control unit 31 to execute various types of processing. For example, the control program is recorded in a non-transitory manner on a computer-readable recording medium such as a flash ROM, an EEPROM, a CD, or a DVD, and is read by a predetermined reading device (not shown) provided in the operation terminal 30 and stored in the storage unit 32. Note that the control program may be downloaded from a server (not shown) to the operation terminal 30 via the communication network N1 and stored in the storage unit 32. The storage unit 32 may also store work information transmitted from the combine 1.

In addition, a dedicated application for causing the combine 1 to automatically travel is installed in the storage unit 32. The operation control unit 31 activates the dedicated application and performs a process of registering various types of information related to the combine 1, a process of generating a target path R for the combine 1, a process of setting control information E1 that controls the operation of the reaping unit 3, a travel start instruction and a travel stop instruction to the combine 1, and the like.

The operation control unit 31 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (a work area) for various types of processing executed by the CPU. Then, the operation control unit 31 controls the operation terminal 30 by executing, with the CPU, various control programs stored in advance in the ROM or the storage unit 32.

As shown in Fig. 1, the operation control unit 31 includes various processing units such as a registration processing unit 311, a setting processing unit 312, and an output processing unit 313. Note that the operation control unit 31 functions as the various processing units by executing, with the CPU, various types of processing according to a control program. In addition, some or all of the processing units may include an electronic circuit. Note that the control program may be a program for causing a plurality of processors to function as the processing unit.

The registration processing unit 311 registers various types of setting information for causing the combine 1 to execute automatic traveling. Specifically, the registration processing unit 311 registers information related to the combine 1 (hereinafter referred to as work vehicle information). The registration processing unit 311 registers information such as a type (a model) of the combine 1, a position where the positioning antenna is attached on the combine 1, a type of a work implement, a size and a shape of the work implement, a position of the work implement with respect to the combine 1, a vehicle speed and an engine speed of the combine 1 while working, and a vehicle speed and an engine speed of the combine 1 while turning, by the operator performing a registration operation on the operation terminal 30.

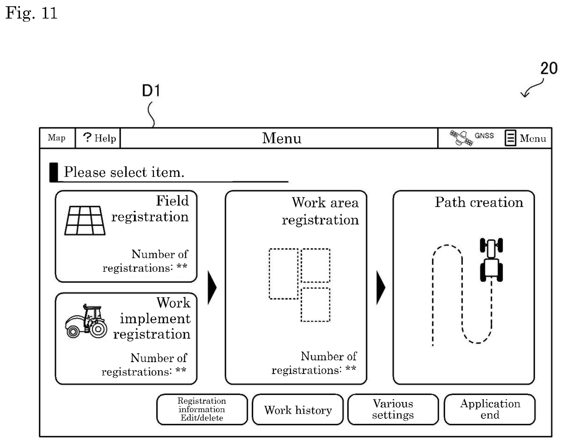

For example, the registration processing unit 311 causes the operation display unit 33 to display a menu screen D1 shown in Fig. 11. The operator selects, for example, "work implement registration" on the menu screen D1 to register work implement information related to the work implement (the reaping unit 3).

The registration processing unit 311 also registers information related to the field F (hereinafter referred to as field information). The registration processing unit 311 registers information such as the position and the shape of the field F, the travel start position S where work starts and the travel end position G where work ends (see Fig. 4), the work direction, and the like by performing a registration operation on the operation terminal 30. The work direction means the direction in which the combine 1 travels while the reaping unit 3 is working in the work area F1 excluding the non-work area from the field F. For example, the operator selects "field registration" on the menu screen D1 to register field information.

The information on the position and the shape of the field F can be automatically acquired, for example, when the operator gets on the combine 1 and drives the combine 1 to make one round along an outer periphery of the field F, and records a transition of position information of the positioning antenna at that time. In addition, the position and the shape of the field F can also be acquired based on a polygon obtained by the operator operating the operation terminal 30 and designating a plurality of points on a map in a state in which the map is displayed on the operation terminal 30. The area specified by the acquired position and shape of the field F is an area where the combine 1 can travel (a travel area).

Furthermore, the registration processing unit 311 registers information related to how the work is to be performed specifically (hereinafter referred to as work information). The registration processing unit 311 is configured to be able to set work information such as whether an unmanned combine 1 is working cooperatively with a manned combine 1, the number of skips, which is the number of work paths that the combine 1 skips when turning on a headland, a width of the headland, and a width of a non-cultivated site. For example, the operator selects "work area registration" on the menu screen D1 to register work information.

Furthermore, the registration processing unit 311 registers the target path R, which is a path along which the combine 1 is caused to automatically travel, based on the above-described respective pieces of setting information. The target path R is, for example, a work path from the travel start position S to the travel end position G (see Fig. 4). The target path R shown in Fig. 4 includes straight work paths along which the combine 1 travels back and forth in parallel in an area where the reaping target is planted (the work area F1), and turning paths connecting the work paths. The registration processing unit 311 generates and registers the target path R for the combine 1 based on the above-described respective pieces of setting information. For example, the operator selects "path creation" on the menu screen D1 and issues an instruction to generate the target path R. The registration processing unit 311 can generate and register a plurality of target paths R for one field F according to the work content.

The setting processing unit 312 sets control information E1 (see Fig. 8) that controls the operation of the reaping unit 3. Specifically, the setting processing unit 312 sets the control information E1 based on the respective positions of the start end and the terminal end of each work path included in the target path R. For example, the setting processing unit 312 sets information that defines the height of the reaping unit 3, the timing for switching the reaping operation of the reaping unit 3, and the timing for switching ON/OFF of the reaping height control function of the reaping unit 3 based on the respective positions of the start end and the terminal end of each work path.

For example, as shown in Fig. 9, the setting processing unit 312 sets the height of the reaping unit 3 to the height H2 (the intermediate position) for the position P2 (the position of the combine 1) where the distance (the distance upstream of the start end P3) from the start end P3 of the work path R1n to the reaping unit 3 (the front end of the reaping unit 3) is the distance X1, and sets information that defines the timing for switching the reaping operation (the rotation operation of the raking reel 14) from the OFF state to the ON state (see Fig. 8).

In addition, the setting processing unit 312 sets information that defines the timing for switching the reaping height control function from the OFF state to the ON state for the position P4 (the position of the combine 1) where the distance from the start end P3 of the work path R1n to the reaping unit 3 (the front end of the reaping unit 3) (the distance in the direction of travel from the start end P3) is the distance X2 (see Fig. 8).

Also, as shown in Fig. 10, the setting processing unit 312 sets information that defines the timing for switching the reaping height control function from the ON state to the OFF state for the position P5 (the position of the combine 1) where the distance from the terminal end P6 of the work path R1n to the reaping unit 3 (the front end of the reaping unit 3) (the distance upstream of the terminal end P6) is the distance Y2 (see Fig. 8). Furthermore, the setting processing unit 312 sets the height of the reaping unit 3 with respect to the position P5 to the height when the reaping height control function is changed from the ON state to the OFF state (see Fig. 8).

In addition, the setting processing unit 312 sets the height of the reaping unit 3 to the height H1 (the highest position) for the position P7 (the position of the combine 1) where the distance (the distance in the direction of travel from the terminal end P6) from the terminal end P6 of the work path R1n to the reaping unit 3 (the front end of the reaping unit 3) is the distance Y1, and sets information that defines the timing for switching the reaping operation (the rotation operation of the raking reel 14) from the ON state to the OFF state (see Fig. 8).

In this way, the setting processing unit 312 sets information that defines the height of the reaping unit 3, the timing for switching the reaping operation of the reaping unit 3, and the timing for switching ON/OFF of the reaping height control function of the reaping unit 3 for each work path (see Fig. 8).

The output processing unit 313 outputs, to the combine 1, path data including information on the target path R registered by the registration processing unit 311 and the control information E1 set by the setting processing unit 312 (see Fig. 8).

In addition, the operation control unit 31 receives, from the operator, an instruction operation to start work (a work start instruction operation), an instruction operation to stop work by the combine 1 that is automatically traveling (a work stop instruction operation), and the like. When the operation control unit 31 receives the work start instruction operation, the operation control unit 31 outputs the work start instruction to the combine 1.

When the vehicle control device 11A of the combine 1 acquires a work start instruction from the operation terminal 30, the vehicle control device 11A starts the automatic traveling of the combine 1 and causes the combine 1 to automatically travel along the target path R. In addition, when the reaping control device 11B acquires a work start instruction from the operation terminal 30, the reaping control device 11B refers to the control information E1, sets the height of the reaping unit 3 according to the current position of the combine 1, switches ON/OFF of the reaping operation (the power transmission mechanism) of the reaping unit 3, and switches ON/OFF of the reaping height control function of the reaping unit 3. Furthermore, when the vehicle control device 11A and the reaping control device 11B acquire a travel stop instruction from the operation terminal 30, the vehicle control device 11A and the reaping control device 11B stop the automatic traveling and reaping work of the combine 1.

Note that the operation terminal 30 may be able to access a website (an agricultural support site) of an agricultural support service provided by a server via the communication network N1. In this case, the operation terminal 30 can function as an operation terminal of the server, by the operation control unit 31 executing a browser program.

### [Automatic Traveling Processing of First Embodiment]

Hereinafter, an example of the automatic traveling processing executed by the vehicle control device 11A and the reaping control device 11B of the combine 1 will be described with reference to Figs. 12 and 13.

The present invention can be understood as an invention of an automatic traveling method for executing one or more steps included in the automatic traveling processing. Furthermore, one or more steps included in the automatic traveling processing described here may be appropriately omitted. Note that an execution order of each step in the automatic traveling processing may be different within a range in which similar operational effects are produced. Furthermore, here, a case where the vehicle control device 11A and the reaping control device 11B execute each step in the automatic traveling processing will be described as an example, but an automatic traveling method in which one or more processors execute each step in the automatic traveling processing in a distributed manner is also considered as another embodiment. The automatic traveling method includes the work method of the present invention.

### <Step S1>

In step S1, the vehicle control device 11A determines whether a work start instruction has been acquired. When the work start instruction from the operation terminal 30 is acquired (S1: Yes), the vehicle control device 11A transitions the processing to step S2. The vehicle control device 11A waits until the work start instruction is acquired (S1: No).

### <Step S2>

In step S2, the vehicle control device 11A starts the automatic traveling processing. Specifically, the vehicle control device 11A causes the combine 1 to automatically travel along the target path R included in the path data acquired from the operation terminal 30.

### <Step S3>

Next, in step S3, the reaping control device 11B determines whether the combine 1 has reached the position P2 (see Fig. 9) on the straight path R2b where the distance between the reaping unit 3 (the front end of the reaping unit 3) and the start end P3 of the work path R1n is X1. When it is determined that the combine 1 has reached the position P2 (S3: Yes), the reaping control device 11B transitions the processing to step S4. The reaping control device 11B maintains the reaping unit 3 at the height H1 (see Fig. 6) of the highest position until the combine 1 reaches the position P2 (S3: No). The combine 1 automatically travels with the reaping unit 3 set to the highest position in the turning path R2a and the section L1 to the position P2 on the straight path R2b.

### <Step S4>

In step S4, the reaping control device 11B lowers the reaping unit 3 from the highest position (the height H1) to the height H2 (see Fig. 7) of the intermediate position, which is one step lower. For example, the reaping control device 11B outputs a lowering instruction to the raising/lowering device 19 (see Fig. 2) such that the reaping unit 3 is at the height H2 at the point in time when the combine 1 reaches the position P2.

Furthermore, when the reaping unit 3 reaches the height H2, the reaping control device 11B switches the reaping operation of the reaping unit 3 from OFF to ON (see Fig. 8). That is, the reaping control device 11B switches the power transmission mechanism to ON at the timing when the distance to the start end P3 of the work path R1n is X1, and instructs the reaping unit 3 to start the reaping operation (the rotation operation of the raking reel 14). Accordingly, the combine 1 starts driving the reaping unit 3 from the position P2. At this point in time, since the reaping height control function that controls the height of the reaping unit 3 is set to OFF (see Fig. 8), the reaping unit 3 is driven while maintaining the height H2 of the intermediate position in the section from the start end P3 of the work path R1n to the distance X2.

### <Step S5>

Next, in step S5, the reaping control device 11B determines whether the combine 1 has reached the position P4 (see Fig. 9) on the work path R1n where the distance between the reaping unit 3 (the front end of the reaping unit 3) and the start end P3 of the work path R1n is X2. When it is determined that the combine 1 has reached the position P4 (S5: Yes), the reaping control device 11B transitions the processing to step S6. The reaping control device 11B causes the combine 1 to execute reaping work while maintaining the reaping unit 3 at the height H2 of the intermediate position until the combine 1 reaches the position P4 from the start end P3.

### <Step S6>

In step S6, the reaping control device 11B switches the reaping height control function from OFF to ON (see Fig. 8). Specifically, the reaping control device 11B switches the reaping height control function of the reaping unit 3 to the ON state after the reaping unit 3 performs reaping work at the height H2 in the section of the distance X2. Accordingly, the raising/lowering device 19 lowers the reaping unit 3, for example, from the height H2 to the height of the ridge A. The vehicle control device 11A executes reaping work on the work path R1n from the position P4 while automatically traveling with the reaping height control function in the ON state. The combine 1 automatically travels from the position P4 and raises and lowers the reaping unit 3 according to the height of the ridge A to perform reaping work.

### <Step S7>

Next, in step S7, the reaping control device 11B determines whether the combine 1 has reached the position P5 (see Fig. 10) on the work path R1n where the distance between the reaping unit 3 (the front end of the reaping unit 3) and the terminal end P6 of the work path R1n is Y2. When it is determined that the combine 1 has reached the position P5 (S7: Yes), the reaping control device 11B transitions the processing to step S8. The reaping control device 11B executes reaping work while controlling the reaping unit 3 to a height corresponding to the height of the ridge A until the combine 1 reaches the position P5 (S7: No).

### <Step S8>

In step S8 (see Fig. 11), the reaping control device 11B switches the reaping height control function from ON to OFF (see Fig. 8). Specifically, the reaping control device 11B switches the reaping height control function of the reaping unit 3 to the OFF state at the timing when the reaping control device 11B approaches the terminal end P6 of the work path R1n (the position P5). Furthermore, the reaping control device 11B sets the height of the reaping unit 3 to the height of the reaping unit 3 when the reaping height control function is switched to OFF (the height of the reaping unit 3 when the combine 1 reaches the position P5). The vehicle control device 11A executes reaping work while automatically traveling with the height of the reaping unit 3 fixed from the position P5 on the work path R1n.

### <Step S9>

Next, in step S9, the reaping control device 11B determines whether the combine 1 has reached the position P7 (see Fig. 10) on the straight path R2c where the distance between the reaping unit 3 (the front end of the reaping unit 3) and the terminal end P6 of the work path R1n is Y1. When it is determined that the combine 1 has reached the position P7 (S9: Yes), the reaping control device 11B transitions the processing to step S10. The reaping control device 11B fixes the height of the reaping unit 3 and continues the reaping operation until the combine 1 reaches the position P7 (S9: No).

### <Step S10>

In step S10, the reaping control device 11B switches the driving of the reaping unit 3 from ON to OFF (see Fig. 8). Specifically, the reaping control device 11B turns off the power transmission mechanism to stop the reaping operation. The combine 1 stops the reaping operation from the position P7 and travels straight.

The reaping control device 11B also raises the reaping unit 3 to the highest position (the height H1 in Fig. 6). Specifically, when the combine 1 reaches the position P7, the reaping control device 11B raises the reaping unit 3 to the height H1 of the highest position. As another embodiment, the reaping control device 11B may output a raising instruction to the raising/lowering device 19 (see Fig. 2) such that the reaping unit 3 is at the highest position (the height H1) at the point in time when the combine 1 reaches the position P7.

The vehicle control device 11A causes the combine 1 to automatically travel along the straight path R2c to the terminal end P8 of the straight path R2c (the start end of the turning path R2d).

### <Step S11>

Next, in step S11, the vehicle control device 11A determines whether the combine 1 has reached the terminal end P8 (see Fig. 8) of the straight path R2c. When it is determined that the combine 1 has reached the terminal end P8 of the straight path R2c (S11: Yes), the vehicle control device 11A transitions the processing to step S12. The vehicle control device 11A causes the combine 1 to automatically travel along the straight path R2c until the combine 1 reaches the terminal end P8 of the straight path R2c. The combine 1 travels straight while maintaining the reaping unit 3 at the height H1 of the highest position until the combine 1 reaches the terminal end P8 (S11: No).

### <Step S12>

In step S12, the vehicle control device 11A causes the combine 1 to turn along the turning path R2d (see Fig. 10). The combine 1 automatically travels along the turning path R2d while maintaining the reaping unit 3 at the height H1 of the highest position.

### <Step S13>

Next, in step S13, the vehicle control device 11A and the reaping control device 11B determine whether the combine 1 has reached the travel end position G (see Fig. 4). When it is determined that the combine 1 has reached the travel end position G (S13: Yes), the vehicle control device 11A and the reaping control device 11B end the automatic traveling processing. When it is determined that the combine 1 has not reached the travel end position G (S13: No), the vehicle control device 11A and the reaping control device 11B transition the processing to step S3 (see Fig. 10). The vehicle control device 11A and the reaping control device 11B repeatedly execute the above-described processing until reaching the travel end position G (S13: No).

In this way, the vehicle control device 11A and the reaping control device 11B repeatedly execute the above-described processing until the combine 1 reaches the travel end position G from the travel start position S, and execute reaping work while automatically traveling the combine 1 along the target path R.

As described above, the automatic traveling system 10 according to the present embodiment uses the reaping unit 3 provided on the combine 1 to cut the reaping target. Furthermore, the automatic traveling system 10 controls the height of the reaping unit 3 based on the height of the ground or the reaping target in the work area F1 while the combine 1 is traveling automatically. In addition, the automatic traveling system 10 switches the reaping height control function that controls the height of the reaping unit 3 from disabled to enabled when the reaping unit 3 reaches a position on the work path away from the target start position of the work on the work path by the distance X2 (see Fig. 9) in the work direction.

In addition, the automatic traveling system 10 switches the reaping height control function from enabled to disabled when the reaping unit 3 (the front end of the reaping unit 3) reaches a position on the work path away from the target end position of the work on the work path by the distance Y2 (see Fig. 10) in the opposite direction to the work direction.

According to the above configuration, for example, in the example shown in Fig. 9, in the section from the start end P3 of the work path R1n to the distance X2, the reaping unit 3 can be set at a position higher than the ridge A, thereby preventing the reaping unit 3 from coming into contact with the ridge A and allowing the reaping target to be cut, and from the distance X2 onwards, the reaping unit 3 can be lowered to perform reaping work according to the height of the ridge A. Therefore, it becomes possible to set the height of the reaping unit 3 to an appropriate position with respect to the ridge A and the reaping target.

Furthermore, according to the above configuration, for example, in the example shown in Fig. 10, since the reaping height control function is disabled at the position P5 of the distance Y2 from the terminal end P6 of the work path R1n in the opposite direction to the work direction, the height of the reaping unit 3 is set to, for example, the height when the reaping unit 3 reaches the position P5. Accordingly, for example, even after the combine 1 has passed the terminal end P6, the height of the reaping unit 3 can be maintained constant, and the behavior of the reaping unit 3 can be stabilized.

The work vehicle according to the first embodiment is not limited to a combine, but may be a tractor to which a harvester (for example, a potato harvester) is attached. The tractor may also be equipped with a harvest height control function that controls the harvesting height of the harvester, and may control a lowering start timing of the harvester, an ON/OFF timing of the power transmission mechanism of the harvester, and an ON/OFF timing of the harvest height control function.

### [Second Embodiment]

In a second embodiment, a transplanter (for example, a vegetable transplanter) is taken as an example of a work vehicle. In the following, the description of the same configuration as in the first embodiment will be omitted as appropriate. The automatic traveling system 10 according to the second embodiment includes a transplanter 100 and an operation terminal 30.

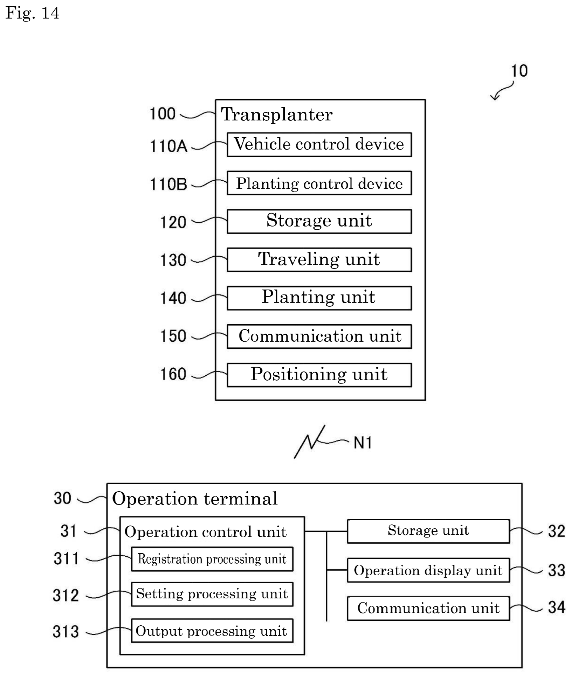

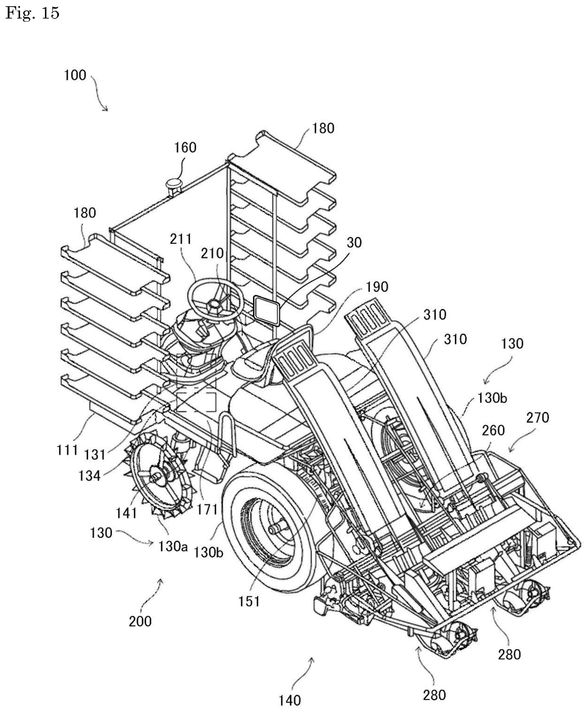

As shown in Figs. 14 and 15, the transplanter 100 includes a vehicle control device 110A, a planting control device 110B, a storage unit 120, a traveling unit 130, a planting unit 140, a communication unit 150, a positioning unit 160, and the like.

The communication unit 150 is a communication interface for connecting the transplanter 100 to the communication network N1 in a wired or wireless manner, and for executing data communication according to a predetermined communication protocol with the operation terminal 30 or the like via the communication network N1.

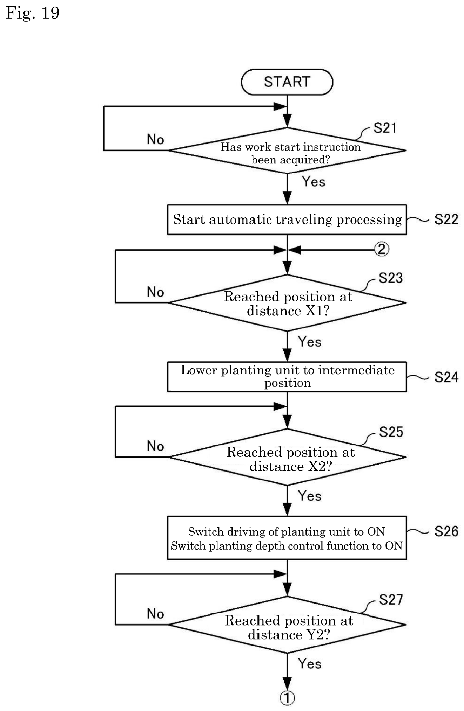

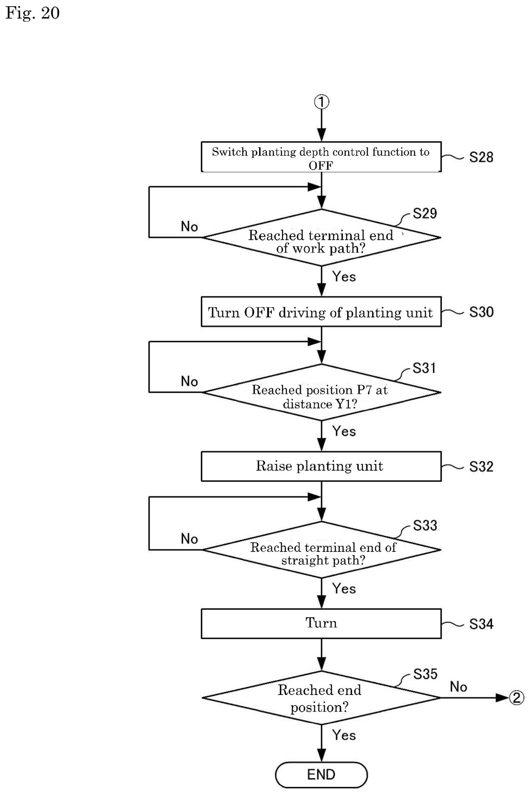

The storage unit 120 is a non-volatile storage unit such as an HDD, an SSD, or a flash memory that stores various types of information. The storage unit 120 stores a control program such as an automatic traveling program for causing the vehicle control device 110A and the planting control device 110B to execute automatic traveling processing (see Figs. 19 and 20) to be described later. For example, the automatic traveling program is recorded in a non-transitory manner on a computer-readable recording medium such as a CD or a DVD, and is read by a predetermined reading device (not shown) and stored in the storage unit 120. Note that the automatic traveling program may be downloaded from a server (not shown) to the transplanter 100 via the communication network and stored in the storage unit 120. The storage unit 120 may also store data of the target path R generated by the operation terminal 30.

A vehicle body portion 200 of the transplanter 100 includes a machine body frame 111, an engine 131, a transmission 134, and a pair of left and right traveling units 130. The engine 131 and the transmission 134 are attached to the machine body frame 111. The engine 131 is disposed at the front near the center in the left-right direction of the vehicle body portion 200, and generates rotational power to drive each unit. The transmission 134 is connected to the lower part of the engine 131 and changes the speed of the power of the engine 131. The transmission 134 is connected to a PTO shaft (not shown) provided at the rear of the vehicle body portion 200, and transmits the power of the engine 131 to the planting unit 140 (the transplanting work unit) via the PTO shaft.

The pair of left and right traveling units 130 includes a pair of front wheels 130a rotatably attached to the front at both ends in the left-right direction, and a pair of rear wheels 130b rotatably attached to the rear at both ends in the left-right direction. The pair of left and right front wheels 130a are supported at both left and right ends of a front axle case 141 provided at the front of the machine body frame 111, and the pair of left and right rear wheels 130b are supported at both left and right ends of a rear axle case 151 provided at the rear of the machine body frame 111. The power from the engine 131 and the transmission 134 is transmitted to the pair of left and right front wheels 130a and the pair of left and right rear wheels 130b via the front axle case 141 and the rear axle case 151, thereby driving the pair of left and right front wheels 130a and the pair of left and right rear wheels 130b.

The vehicle body portion 200 is provided with a driver's seat 190 near the center of the upper part of the machine body frame 111. A step 171 on the floor around the driver's seat 190 that the operator can move on is provided in the upper part of the machine body frame 111, and a plurality of spare seedling trays 180 for placing seedling mats to be replenished in the planting unit 140 are provided in front of the step 171. The vehicle body portion 200 is provided with driving operation tools such as a steering wheel 211, a shift operation pedal 210, and a shift lever (not shown) around the driver's seat 190, and the operation terminal 30.

The planting unit 140 performs transplanting work of transplanting seedlings of vegetables or the like into the ridges A (see Fig. 4) of the field F in groups of a plurality of rows (for example, two rows). The planting unit 140 is disposed behind the vehicle body portion 200 and is connected to the vehicle body portion 200 via a raising/lowering device 260, and the raising/lowering device 260 is configured to be able to raise and lower the planting unit 140 with respect to the vehicle body portion 200.

The planting unit 140 includes a seedling supply unit 270 that supplies seedlings and a plurality of transplanting units 280. Each transplanting unit 280 includes, for example, a seedling picking unit (not shown) that picks up seedlings from the seedling supply unit 270, and a planting unit (not shown) that receives the seedlings picked up by the seedling picking unit and plants the seedlings in a field. The seedling supply unit 270 includes a seedling tray 310 on which a seedling mat is placed, and a vertical feed mechanism (not shown) that feeds the seedlings placed on the seedling tray 310 vertically downward. A plurality of transplanting units 280 are provided corresponding to each of the plurality of rows.

The planting unit 140 includes, for example, a transmission shaft (not shown) extending in the left-right direction as an input shaft of the planting unit 140. The transmission shaft is connected to a power intake unit (not shown) that takes in power from the transmission 134 of the vehicle body portion 200 via the PTO shaft, an output unit (not shown) that outputs the taken-in power to the transplanting unit 280, a transplanting clutch unit (not shown) that switches the connection and disconnection of the taken-in power to the seedling supply unit 270 and the seedling picking unit, and the like. The planting unit 140 is configured to transmit power from the transmission 134 to the transmission shaft via the PTO shaft, and then from the transmission shaft to each transplanting unit via the power intake unit and the output unit.

For example, the seedling picking unit includes seedling picking claws (not shown) and a seedling picking operating mechanism (not shown) that operates the seedling picking claws. The seedling picking operating mechanism is configured to rotate the seedling picking claw between a seedling picking position where the seedling is picked up from the seedling supply unit 270 and a seedling picking claw side transfer position where the seedling is released downward in response to the power transmitted via the output unit. The planting unit includes a planting claw (not shown) and a planting operating mechanism (not shown) that operates the planting claw. The planting operating mechanism is configured to rotate the planting claw between a planting claw side transfer position where the planting claw takes over the seedling from the seedling picking unit and a planting position where the seedling is released into the field soil, in response to the power transmitted via the output unit. The planting unit 140 transplants seedlings into the field F by operating the above-described units in conjunction with each other.

The positioning unit 160 is provided at the front upper part of the vehicle body portion 200, and calculates the current position of the transplanter 100 based on the GNSS signals received by the positioning antenna from satellites.

The vehicle control device 110A controls the operation of the transplanter 100 in response to various user operations on the transplanter 100. Furthermore, the vehicle control device 110A executes the automatic traveling processing of the transplanter 100 based on the current position of the transplanter 100 calculated by the positioning unit 160 and a target path R that is set in advance.

The planting control device 110B controls the operation of the planting unit 140. Specifically, the planting control device 110B controls the height and the planting depth of the planting unit 140 based on the height of the ground (the ridge A) in the work area F1 during automatic travel of the transplanter 100. In addition, the planting control device 110B switches a planting depth control function that controls the planting depth of the planting target (for example, vegetables) from disabled to enabled when the planting unit 140 reaches a first position on the work path away from the target start position of the work on the work path by a first predetermined distance in the work direction.

Specifically, when the planting depth control function is enabled, the planting control device 110B detects the height of the ridge A using a sensor (not shown) provided in the planting unit 140 and controls the planting depth according to the height of the ridge A.

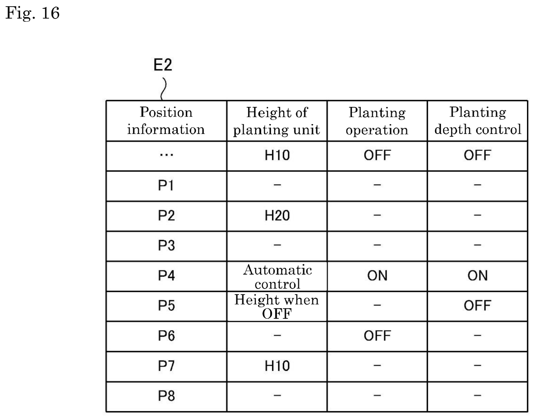

The planting control device 110B also controls the operation of the planting unit 140 based on control information E2 (see Fig. 16) generated in the operation terminal 30. Furthermore, the planting control device 110B causes the planting unit 140 to execute a planting operation based on the current position of the transplanter 100 calculated by the positioning unit 160 and the control information E2. Accordingly, the transplanter 100 performs planting work in the field F based on the control information E2 while automatically traveling along the target path R. As shown in Fig. 16, in the control information E2, information such as the height of the planting unit 140, the timing for switching the planting operation, and the timing for switching the planting depth control function between enabling and disabling (ON/OFF) is registered in association with position information. The planting control device 110B is an example of a control processing unit of the present invention.

Furthermore, when the vehicle control device 110A and the planting control device 110B acquire a travel stop instruction from the operation terminal 30, the vehicle control device 110A and the planting control device 110B stop the automatic traveling and planting work of the transplanter 100. For example, when the operator presses a stop button on the operation screen of the operation terminal 30, the operation terminal 30 outputs a travel stop instruction to the transplanter 100.

While the transplanter 100 is traveling automatically, the planting control device 110B raises and lowers the planting unit 140, controls the driving of the planting unit 140 (or the PTO) to execute or stop the planting operation, and turns the planting depth control function of the planting unit 140 ON/OFF based on the position of the transplanter 100 and the control information E2 (see Fig. 16) set on the target path R.

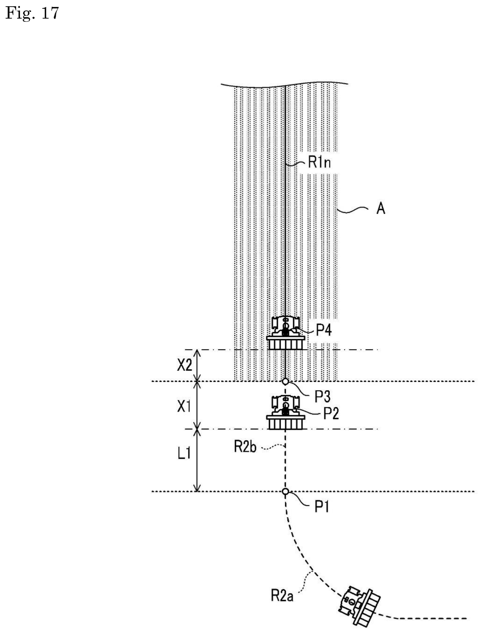

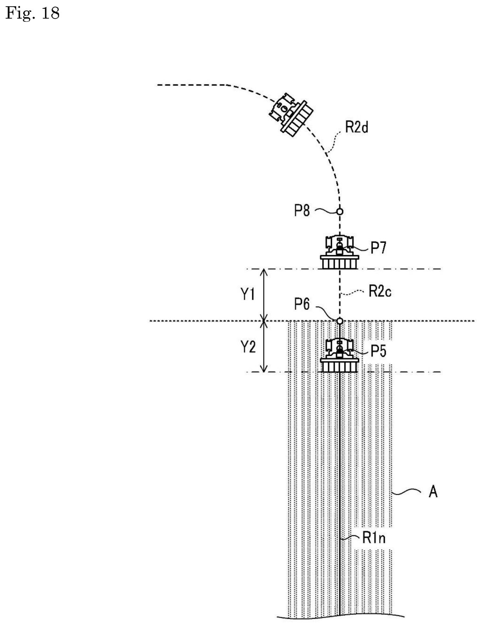

A work method of the planting work according to the second embodiment will be described with reference to Figs. 17 and 18.

For example, the planting control device 110B sets (maintains) the planting unit 140 to a non-working position (for example, the highest position) (a height H10) in a section L1 from the start end P1 of the straight path R2b to a predetermined position (a position a distance X1 before the start end P3) just before the start end P3 of the work path R1n. Moreover, the planting control device 110B sets (maintains) the planting depth control function to OFF (see Fig. 16). At the start end P1, the vehicle control device 110A may set the traveling speed (the vehicle speed) of the transplanter 100 to the vehicle speed (the working vehicle speed) during the planting work.

At the timing when the transplanter 100 reaches a position P2 where the distance between the planting unit 140 (for example, the rear end of the planting unit 140) and the start end P3 is X1, the planting control device 110B sets the planting unit 140 one step lower from the highest position to an intermediate position (a height H20). Specifically, the planting control device 110B outputs a lowering instruction to the raising/lowering device 260 (see Fig. 15) such that the planting unit 140 is at the intermediate position at the point in time when the transplanter 100 reaches the position P2. The planting control device 110B may output a lowering instruction to the raising/lowering device 260 such that the planting unit 140 is at the intermediate position at the point in time before the transplanter 100 reaches the position P2.

The intermediate position is a height between the lowest position and the highest position, and is higher than the ridge A. Furthermore, the height of the intermediate position may be set by the operator or may be automatically set by the automatic traveling system 10. For example, the operator may check the height of the ridge A and input a height that is higher than the ridge A as the intermediate position. Furthermore, for example, the planting control device 110B may acquire height information of the ridge A from work information (a work history) during ridge-making work, and set a height that is higher than the ridge A as the intermediate position.

The transplanter 100 automatically travels along the straight path R2b while maintaining the planting unit 140 at the intermediate position. When the transplanter 100 reaches the start end P3, the vehicle control device 110A causes the transplanter 100 to travel straight along the work path R1n toward a terminal end P6 (see Fig. 18). When the transplanter 100 reaches a position P4, the planting control device 110B lowers the planting unit 140 to the lowest position, switches the drive (the PTO) of the planting unit 140 from OFF to ON, and switches the planting depth control function from OFF to ON (see Fig. 16). That is, the planting control device 110B switches the planting depth control function from OFF to ON when the planting unit 140 (the rear end of the planting unit 140) reaches a position (an example of a first position according to the present invention) on the work path R1n away from the start end P3 by a distance X2 (an example of a first predetermined distance according to the present invention) in the work direction.

Specifically, when the transplanter 100 reaches the position P4, the planting control device 110B instructs the raising/lowering device 260 to start an operation to change the depth of the planting unit 140. When the planting depth control function is switched to ON, the raising/lowering device 260 detects the ridge A and raises and lowers the planting unit 140 in response to changes in the height of the ridge A, thereby maintaining a constant planting depth. Here, when the planting depth control function is OFF, the planting unit 140 is maintained at a predetermined height that has been set in advance. That is, the planting control device 110B sets the height of the planting unit 140 to the predetermined height, for example, the height H20 of the intermediate position, up to a position away from the start end P3 by the distance X2. Accordingly, the height of the planting unit 140 is maintained at the height H20 of the intermediate position in the section from the position P2 on the front side of the start end P3 by the distance X1 to the position P4 on the work direction side of the start end P3 by the distance X2. Furthermore, the planting unit 140 stops the planting operation while being maintained at the intermediate position until the transplanter 100 reaches the position P4.

The distance X2 is set on the work direction side of the work path R1n with respect to the start end P3. Furthermore, the distance X2 is the distance from the start end P3 to the planting unit 140 (the rear end of the planting unit 140) when the current position of the transplanter 100 is the position P4. The distance X2 may be preset by the operator. Furthermore, the automatic traveling system 10 may acquire position information of the ridge A and automatically set the distance X2 based on the position information. For example, the distance X2 is the minimum distance required for the vehicle speed of the transplanter 100 to stabilize.

The transplanter 100 performs planting work while automatically traveling from the position P4 with the planting depth control function in an ON state.

Fig. 18 shows the work path R1n and non-work paths (a straight path R2c and a turning path R2d) connected to the terminal end P6 of the work path R1n. When the transplanter 100 ends the planting work on the work path R1n, the transplanter 100 travels along the straight path R2c and the turning path R2d to move to the next work path (not shown).

For example, when the transplanter 100 approaches the terminal end P6 of the work path R1n (an example of a target end position of the present invention), the planting control device 110B switches the planting depth control function from ON to OFF at a position (an example of a second position of the present invention) away from the terminal end P6 by a distance Y2 (an example of a second predetermined distance of the present invention) in the opposite direction to the work direction (see Fig. 16). Specifically, the planting control device 110B switches the planting depth control function from ON to OFF when the planting unit 140 (the rear end of the planting unit 140) reaches a position on the work path R1n away from the terminal end P6 by the distance Y2 in the opposite direction to the work direction, that is, when the transplanter 100 reaches a position P5.

Furthermore, when the planting control device 110B switches the planting depth control function to OFF, the planting control device 110B sets (maintains) the height of the planting unit 140 to the height when the planting unit 140 reaches the position at the distance Y2 (when the transplanter 100 reaches the position P5). For example, in a case where the height of the planting unit 140 is at the lowest position when the planting unit 140 reaches the position at the distance Y2, the planting control device 110B maintains the height of the planting unit 140 at the lowest position. The planting control device 110B causes the planting unit 140 to execute planting work up to the terminal end P6 while maintaining the height of the planting unit 140.

The distance Y2 is set on the opposite side of the terminal end P6 from the work direction of the work path R1n. Furthermore, the distance Y2 is the distance from the terminal end P6 to the planting unit 140 (the rear end of the planting unit 140) when the current position of the transplanter 100 is the position P5. The distance Y2 may be preset by the operator. Alternatively, the automatic traveling system 10 may automatically set the distance Y2.

From the position P5, the transplanter 100 continues automatic traveling and planting work with the planting depth control function in an OFF state. Thereafter, when the transplanter 100 (or the planting unit 140) reaches the terminal end P6 of the work path R1n, the planting control device 110B switches the driving of the planting unit 140 from ON to OFF (see Fig. 16). Specifically, the planting control device 110B turns off the PTO to stop the planting operation.

As another embodiment, the planting control device 110B may turn off the PTO to stop the planting operation at the timing when the transplanter 100 reaches the position P5. For example, when the transplanter 100 has the function of the ridge-making work, by turning off the PTO just before the terminal end P6 of the work path R1n and stopping the ridge-making work, the soil held by the ridger can be discharged just before the terminal end of the path, and the ridger can travel to the terminal end of the path while leveling the soil. Therefore, when the ridger travels to the start end of the path while carrying soil and then raises the work implement, it is possible to prevent the soil from being discharged at the terminal end of the path and forming a pile. This configuration is applicable to a work vehicle (a ridger) that only performs ridge-making work.

At the timing when the transplanter 100 automatically travels with the planting operation stopped and reaches the position P7 where the distance between the planting unit 140 (the rear end of the planting unit 140) and the terminal end P6 is Y1, the planting control device 110B raises the planting unit 140 to the highest position (the height H10). Specifically, the planting control device 110B outputs a raising instruction to the raising/lowering device 260 (see Fig. 15) such that the planting unit 140 is at the highest position at the point in time before the transplanter 100 reaches a terminal end P8 of the straight path R2c (the start end of the turning path R2d). The vehicle control device 110A causes the transplanter 100 to automatically travel along the straight path R2c to the terminal end P8 of the straight path R2c (the start end of the turning path R2d). The planting control device 110B may output a raising instruction to the raising/lowering device 260 such that the planting unit 140 is at the highest position at the point in time when the transplanter 100 reaches the position P7 or at an earlier point in time. As another embodiment, the vehicle control device 110A may temporarily stop the transplanter 100 at the position P8 until the planting unit 140 reaches the highest position.

When the transplanter 100 reaches the position P8, the vehicle control device 110A causes the transplanter 100 to automatically travel (turn) along the turning path R2d. The planting control device 110B and the vehicle control device 110A execute the above-described processing (see Figs. 16 to 18) for each work path.

In the operation terminal 30 according to the second embodiment, the setting processing unit 312 sets the control information E2 (see Fig. 16) that controls the operation of the planting unit 140. Specifically, the setting processing unit 312 sets the control information E2 based on the respective positions of the start end and the terminal end of each work path included in the target path R. For example, the setting processing unit 312 sets information that defines the height of the planting unit 140, the timing for switching the planting operation of the planting unit 140, and the timing for switching ON/OFF of the planting depth control function of the planting unit 140 based on the respective positions of the start end and the terminal end of each work path.

For example, as shown in Fig. 17, the setting processing unit 312 sets the height of the planting unit 140 to the height H20 (the intermediate position) for the position P2 (the position of the transplanter 100) where the distance from the start end P3 of the work path R1n to the planting unit 140 (the rear end of the planting unit 140) (the distance upstream of the start end P3) is the distance X1 (see Fig. 16).

In addition, the setting processing unit 312 sets information that defines the timing for switching the planting operation from the OFF state to the ON state and for switching the planting depth control function from the OFF state to the ON state for the position P4 (the position of the transplanter 100) where the distance from the start end P3 of the work path R1n to the planting unit 140 (the rear end of the planting unit 140) (the distance in the direction of travel from the start end P3) is the distance X2 (see Fig. 16).

Also, as shown in Fig. 18, the setting processing unit 312 sets information that defines the timing for switching the planting depth control function from the ON state to the OFF state for the position P5 (the position of the transplanter 100) where the distance from the terminal end P6 of the work path R1n to the planting unit 140 (the rear end of the planting unit 140) (the distance upstream of the terminal end P6) is the distance Y2 (see Fig. 16). Furthermore, the setting processing unit 312 sets the height of the planting unit 140 with respect to the position P5 to the height when the planting depth control function is changed from the ON state to the OFF state (see Fig. 16). Furthermore, the setting processing unit 312 sets information that defines the timing for switching the planting operation from the ON state to the OFF state for the position P6 at the terminal end of the work path R1n (see Fig. 16).

Also, the setting processing unit 312 sets information that defines the timing for switching the planting unit 140 to the highest position (the height H10) for the position P7 (the position of the transplanter 100) where the distance from the terminal end P6 of the work path R1n to the planting unit 140 (the rear end of the planting unit 140) (the distance in the direction of travel from the terminal end P6) is the distance Y1 (see Fig. 16).

In this way, the setting processing unit 312 sets information that defines the height of the planting unit 140, the timing for switching the planting operation of the planting unit 140, and the timing for switching ON/OFF of the planting depth control function of the planting unit 140 for each work path (see Fig. 16).

The output processing unit 313 outputs, to the transplanter 100, path data including information on the target path R registered by the registration processing unit 311 and the control information E2 set by the setting processing unit 312 (see Fig. 16).

### [Automatic Traveling Processing of Second Embodiment]

Hereinafter, an example of the automatic traveling processing executed by the vehicle control device 110A and the planting control device 110B of the transplanter 100 will be described with reference to Figs. 19 and 20.

### <Step S21>

In step S21, the vehicle control device 110A determines whether a work start instruction has been acquired. When the work start instruction from the operation terminal 30 is acquired (S21: Yes), the vehicle control device 110A transitions the processing to step S22. The vehicle control device 110A waits until the work start instruction is acquired (S21: No).

### <Step S22>

In step S22, the vehicle control device 110A starts the automatic traveling processing. Specifically, the vehicle control device 110A causes the transplanter 100 to automatically travel along the target path R included in the path data acquired from the operation terminal 30.

### <Step S23>

Next, in step S23, the planting control device 110B determines whether the transplanter 100 has reached the position P2 (see Fig. 17) on the straight path R2b where the distance between the planting unit 140 (the rear end of the planting unit 140) and the start end P3 of the work path R1n is X1. When it is determined that the transplanter 100 has reached the position P2 (S23: Yes), the planting control device 110B transitions the processing to step S24. The planting control device 110B maintains the planting unit 140 at the highest position (the height H10) until the transplanter 100 reaches the position P2 (S23: No). The transplanter 100 automatically travels with the planting unit 140 set to the highest position in the turning path R2a and the section L1 to the position P2 on the straight path R2b.

### <Step S24>

In step S24, the planting control device 110B lowers the planting unit 140 from the highest position (the height H10) to the height H20 of the intermediate position, which is one step lower. For example, the planting control device 110B outputs a lowering instruction to the raising/lowering device 260 such that the planting unit 140 is at the height H20 at the point in time when the transplanter 100 reaches the position P2.

### <Step S25>

Next, in step S25, the planting control device 110B determines whether the transplanter 100 has reached the position P4 (see Fig. 17) on the work path R1n where the distance between the planting unit 140 (the rear end of the planting unit 140) and the start end P3 of the work path R1n is X2. When it is determined that the transplanter 100 has reached the position P4 (S25: Yes), the planting control device 110B transitions the processing to step S26. The planting control device 110B maintains the planting unit 140 at the height H20 of the intermediate position until the transplanter 100 reaches the position P4 from the start end P3.

### <Step S26>

In step S26, the planting control device 110B switches the planting operation from the OFF state to the ON state, and also switches the planting depth control function from OFF to ON (see Fig. 16). Specifically, at the timing when the distance from the start end P3 of the work path R1n is X2, the planting control device 110B switches the PTO to ON, instructs the planting unit 140 to start the planting operation, and switches the planting depth control function of the planting unit 140 to the ON state. Accordingly, the raising/lowering device 260 lowers the planting unit 140, for example, from the height H20 to the height of the ridge A. The vehicle control device 110A executes planting work on the work path R1n from the position P4 while automatically traveling with the planting depth control function in the ON state. The transplanter 100 automatically travels from the position P4 and raises and lowers the planting unit 140 according to the height of the ridge A to perform planting work.

### <Step S27>

Next, in step S27, the planting control device 110B determines whether the transplanter 100 has reached the position P5 (see Fig. 18) on the work path R1n where the distance between the planting unit 140 (the rear end of the planting unit 140) and the terminal end P6 of the work path R1n is Y2. When it is determined that the transplanter 100 has reached the position P5 (S27: Yes), the planting control device 110B transitions the processing to step S28. The planting control device 110B executes planting work while controlling the planting unit 140 to a height corresponding to the height of the ridge A until the transplanter 100 reaches the position P5 (S27: No).

### <Step S28>

In step S28 (see Fig. 20), the planting control device 110B switches the planting depth control function from ON to OFF (see Fig. 16). Specifically, the planting control device 110B switches the planting depth control function of the planting unit 140 to the OFF state at the timing when the planting control device 110B approaches the terminal end P6 of the work path R1n (the position P5). Furthermore, the planting control device 110B sets the height of the planting unit 140 to the height of the planting unit 140 when the planting depth control function is switched to OFF (the height of the planting unit 140 when the transplanter 100 reaches the position P5). The vehicle control device 110A executes planting work while automatically traveling with the height of the planting unit 140 fixed from the position P5 on the work path R1n.

### <Step S29>

Next, in step S29, the planting control device 110B determines whether the transplanter 100 has reached the terminal end P6 (see Fig. 18) of the work path R1n. When it is determined that the transplanter 100 has reached the terminal end P6 (S29: Yes), the planting control device 110B transitions the processing to step S30. The planting control device 110B fixes the height of the planting unit 140 and continues the planting operation until the transplanter 100 reaches the terminal end P6 (S29: No).

### <Step S30>

In step S30, the planting control device 110B switches the driving of the planting unit 140 from ON to OFF (see Fig. 16). Specifically, the planting control device 110B turns off the PTO to stop the planting operation. From the terminal end P6, the transplanter 100 stops the planting operation and travels straight along the straight path R2c.

### <Step S31>

Next, in step S31, the planting control device 110B determines whether the transplanter 100 has reached the position P7 (see Fig. 18) on the straight path R2c where the distance between the planting unit 140 (the rear end of the planting unit 140) and the terminal end P6 of the work path R1n is Y1. When it is determined that the transplanter 100 has reached the position P7 (S31: Yes), the planting control device 110B transitions the processing to step S32. The planting control device 110B maintains the height of the planting unit 140 until the transplanter 100 reaches the position P7 (S31: No).

### <Step S32>

In step S32, the planting control device 110B raises the planting unit 140 to the highest position (the height H10). Specifically, when the transplanter 100 reaches the position P7, the planting control device 110B raises the planting unit 140 to the highest position. As another embodiment, the planting control device 110B may output a raising instruction to the raising/lowering device 260 such that the planting unit 140 is at the highest position (the height H10) at the point in time when the transplanter 100 reaches the position P7.

The vehicle control device 110A causes the transplanter 100 to automatically travel along the straight path R2c to the terminal end P8 of the straight path R2c (the start end of the turning path R2d).

### <Step S33>

Next, in step S33, the vehicle control device 110A determines whether the transplanter 100 has reached the terminal end P8 (see Fig. 16) of the straight path R2c. When it is determined that the transplanter 100 has reached the terminal end P8 of the straight path R2c (S33: Yes), the vehicle control device 110A transitions the processing to step S34. The vehicle control device 110A causes the transplanter 100 to automatically travel along the straight path R2c until the transplanter 100 reaches the terminal end P8 of the straight path R2c. The transplanter 100 travels straight while maintaining the planting unit 140 at the height H10 of the highest position until the transplanter 100 reaches the terminal end P8 (S33: No).

### <Step S34>

In step S34, the vehicle control device 110A causes the transplanter 100 to turn along the turning path R2d (see Fig. 18). The transplanter 100 automatically travels along the turning path R2d while maintaining the planting unit 140 at the height H10 of the highest position.

### <Step S35>

Next, in step S35, the vehicle control device 110A and the planting control device 110B determine whether the transplanter 100 has reached the travel end position G (see Fig. 4). When it is determined that the transplanter 100 has reached the travel end position G (S35: Yes), the vehicle control device 110A and the planting control device 110B end the automatic traveling processing. When it is determined that the transplanter 100 has not reached the travel end position G (S35: No), the vehicle control device 110A and the planting control device 110B transition the processing to step S23 (see Fig. 19). The vehicle control device 110A and the planting control device 110B repeatedly execute the above-described processing until reaching the travel end position G (S35: No).

In this way, the vehicle control device 110A and the planting control device 110B repeatedly execute the above-described processing until the transplanter 100 reaches the travel end position G from the travel start position S, and execute planting work while automatically traveling the transplanter 100 along the target path R.

As described above, the automatic traveling system 10 according to the present embodiment uses the planting unit 140 provided on the transplanter 100 to plant the planting target. Furthermore, the automatic traveling system 10 controls the height of the planting unit 140 based on the height of the ground in the work area F1 while the transplanter 100 is traveling automatically. In addition, the automatic traveling system 10 switches the planting depth control function that controls the height of the planting unit 140 from disabled to enabled when the planting unit 140 (the rear end of the planting unit 140) reaches a position on the work path away from the target start position of the work on the work path by the distance X2 (see Fig. 17) in the work direction.

In addition, the automatic traveling system 10 switches the planting depth control function from enabled to disabled when the planting unit 140 (the rear end of the planting unit 140) reaches a position on the work path away from the target end position of the work on the work path by the distance Y2 (see Fig. 18) in the opposite direction to the work direction.

According to the above configuration, for example, in the example shown in Fig. 17, in the section from the start end P3 of the work path R1n to the distance X2, the planting unit 140 can be set at a position higher than the ridge A, thereby preventing the planting unit 140 from coming into contact with the ridge A, and from the distance X2 onwards, the planting unit 140 can be lowered to perform planting work according to the height of the ridge A. Therefore, it becomes possible to set the height of the planting unit 140 to an appropriate position with respect to the ridge A and the planting target.

Furthermore, according to the above configuration, for example, in the example shown in Fig. 18, since the planting depth control function is disabled at the position P5 of the distance Y2 from the terminal end P6 of the work path R1n in the opposite direction to the work direction, the height of the planting unit 140 is set to, for example, the height when the planting unit 140 reaches the position P5. Accordingly, for example, even after the transplanter 100 has passed the terminal end P6, the height of the planting unit 140 can be maintained constant, and the behavior of the planting unit 140 can be stabilized.

The work vehicle according to the second embodiment is not limited to a transplanter, but may be a tractor to which a planting unit is attached. The tractor may also be equipped with a planting depth control function that controls the planting depth of the planting unit, and may control a lowering start timing of the planting unit, an ON/OFF timing of the PTO of the planting unit, and an ON/OFF timing of the planting depth control function.

In the first and second embodiments described above, a combine and a transplanter were taken as examples of work vehicles, but the work vehicle of the present invention is not limited to these and may be any vehicle equipped with a work implement. Furthermore, the work vehicle may be an automatic traveling vehicle or a manual traveling vehicle. In the case of a manual traveling vehicle, for example, the reaping control device 11B notifies the operator of the determined lowering start timing of the reaping unit 3, the ON/OFF timing the power transmission mechanism of the reaping unit 3, and the ON/OFF timing of the reaping height control function, and the operator switches the raising and lowering of the reaping unit 3, the ON/OFF of the power transmission mechanism, and the ON/OFF of the reaping height control function based on each timing.

In each of the above-described embodiments, the automatic traveling system 10 may set the positions P1 to P8 (see Figs. 9, 10, 17, and 18) as follows. The position P1 is the start end of the straight path R2b, which is an extension line of the work path R1n, the position P2 is the position where the work implement is at an intermediate height (a lowering completion position), the position P3 is the start end of the work path R1n, the position P4 is the position where the work implement is at the lowest height (a lowering completion position), the position P5 is the position where the height control function of the work implement is switched from ON to OFF, the position P6 is the terminal end of the work path R1n, the position P7 is the position where the work implement is at the highest height (a rising completion position), and the position P8 is the terminal end of the straight path R2c, which is an extension line of the work path R1n.

Specifically, the automatic traveling system 10 is applicable to so-called straight-line assisted traveling, in which a work vehicle automatically travels straight based on a predetermined reference orientation (a reference orientation). In the straight-line assisted traveling, the automatic traveling system 10 sets the positions P1 to P8 based on field contour information when the field contour information has been acquired, and sets the positions P1 to P8 based on the positions of two reference points (points A and B) when the reference orientation is set when the field contour information has not been acquired.

When the automatic traveling system 10 sets the positions P1 to P8 based on the positions of points A and B, the automatic traveling system 10 sets P1 (or P8), or P2 (or P7), or P3 (or P6) at a position aligned with the point A, and sets P1 (or P8) to P4 (or P5) based on the position of the set P1 (or P8), or P2 (or P7), or P3 (or P6). The automatic traveling system 10 may set a position selected by the operator from among the positions P1 (or P8), P2 (or P7), and P3 (or P6) as a position aligned with the point A.

Alternatively, the automatic traveling system 10 sets P8 (or P1), or P7 (or P2), or P6 (or P3) at a position aligned with the point B, and sets P8 (or P1) to P5 (or P4) based on the position of the set P8 (or P1), or P7 (or P2), or P6 (or P3). The automatic traveling system 10 may set a position selected by the operator from among the positions P8 (or P1), P7 (or P2), and P6 (or P3) as a position aligned with the point B.

In addition, the positions of P1 and P8 on the next straight path may be updated based on the positions where the work vehicle has started and ended automatic traveling on the straight path, and the positions of P2 to P7 may be updated based on the updated positions of P1 and P8. The automatic traveling system 10 repeats this update processing for each straight path. Furthermore, the automatic traveling system 10 may cause the operator to select whether to update the positions P1 and P8 of the next straight path at the point in time when the automatic traveling system 10 reaches the position P8 of the current straight path.

When the present invention is applied to straight-line assisted traveling, the automatic traveling system 10 controls the operation at the positions P2 to P7 in the same manner as in the fully automatic traveling corresponding to the above-described embodiments, but may stop the work vehicle at the point in time when the automatic traveling system 10 reaches the position P8. For example, when the work implement is a reaping unit or a harvesting unit, the work implement may be stopped at the point in time when the work vehicle reaches the position P8. Accordingly, it is possible to prevent the work vehicle from shifting to a turning motion while carrying the reaped material or crop.

### [Additional Note of Invention]

Hereinafter, an outline of the invention extracted from the embodiment will be additionally described. Note that configurations and processing functions described in the following additional notes can be selected and freely combined.

<Additional Note 1>

A work method for harvesting a crop using a harvesting unit provided on a work vehicle, the work method including:
controlling a height of the harvesting unit based on a height of a ground or a crop in a work area during automatic travel of the work vehicle; and
switching a harvest height control function that controls the height of the harvesting unit from disabled to enabled when the harvesting unit reaches a first position on a work path away from a target start position of work on the work path by a first predetermined distance in a work direction.

### <Additional Note 2>

The work method according to Additional Note 1, in which
the harvesting unit is a work implement that harvests a crop on a ridge formed by ridge-making work, and
the height of the harvesting unit from the target start position to the first position is set based on work information during the ridge-making work.

### <Additional Note 3>

A work method for harvesting a crop using a harvesting unit provided on a work vehicle, the work method including:
controlling a height of the harvesting unit based on a height of a ground or a crop in a work area during automatic travel of the work vehicle; and
switching a harvest height control function that controls the height of the harvesting unit from enabled to disabled when the harvesting unit reaches a second position on a work path away from a target end position of work on the work path by a second predetermined distance in an opposite direction to a work direction.

### <Additional Note 4>

The work method according to Additional Note 3, in which driving of the harvesting unit is stopped when the harvesting unit reaches a fourth position on a non-work path connected to the target end position, the fourth position being away from the target end position by a third predetermined distance in the work direction.

### <Additional Note 5>

The work method according to Additional Note 3 or 4, in which
the harvesting unit is a work implement that harvests a crop on a ridge formed by ridge-making work, and
the height of the harvesting unit from the second position to the target end position is set to a height when the harvesting unit reaches the second position.

### <Additional Note 6>

A work method for planting a planting target using a planting unit provided on a work vehicle, the work method including:
controlling a planting depth of the planting target based on a height of a ground in a work area during automatic travel of the work vehicle; and
switching a planting depth control function that controls the planting depth of the planting target from disabled to enabled when the planting unit reaches a first position on a work path away from a target start position of work on the work path by a first predetermined distance in a work direction.

### <Additional Note 7>

The work method according to Additional Note 6, in which
the planting unit is a work implement that plants the planting target on a ridge formed by ridge-making work, and
a height of the planting unit from the target start position to the first position is set based on work information during the ridge-making work.

### <Additional Note 8>

A work method for planting a planting target using a planting unit provided on a work vehicle, the work method including:
controlling a planting depth of the planting target based on a height of a ground in a work area during automatic travel of the work vehicle; and
switching a planting depth control function that controls the planting depth of the planting target from enabled to disabled when the planting unit reaches a second position on a work path away from a target end position of work on the work path by a second predetermined distance in an opposite direction to a work direction.

### <Additional Note 9>

The work method according to Additional Note 8, in which
driving of the planting unit is stopped when the planting unit reaches the second position or the target end position.

### <Additional Note 10>

The work method according to Additional Note 8 or 9, in which
the planting unit is a work implement that plants the planting target on a ridge formed by ridge-making work, and
the height of the planting unit from the second position to the target end position is set to a height when the planting unit reaches the second position.

### <Additional Note 11>

A work program for harvesting a crop using a harvesting unit provided on a work vehicle, the work program for causing one or more processors to execute:
controlling a height of the harvesting unit based on a height of a ground or a crop in a work area during automatic travel of the work vehicle; and
switching a harvest height control function that controls the height of the harvesting unit from disabled to enabled when the harvesting unit reaches a first position on a work path away from a target start position of work on the work path by a first predetermined distance in a work direction.

### <Additional Note 12>

A work program for harvesting a crop using a harvesting unit provided on a work vehicle, the work program for causing one or more processors to execute:
controlling a height of the harvesting unit based on a height of a ground or a crop in a work area during automatic travel of the work vehicle; and
switching a harvest height control function that controls the height of the harvesting unit from enabled to disabled when the harvesting unit reaches a second position on a work path away from a target end position of work on the work path by a second predetermined distance in an opposite direction to a work direction.

### <Additional Note 13>

A work program for planting a planting target using a planting unit provided on a work vehicle, the work program for causing one or more processors to execute:
controlling a planting depth of the planting target based on a height of a ground in a work area during automatic travel of the work vehicle; and
switching a planting depth control function that controls the planting depth of the planting target from disabled to enabled when the planting unit reaches a first position on a work path away from a target start position of work on the work path by a first predetermined distance in a work direction.

### <Additional Note 14>

A work program for planting a planting target using a planting unit provided on a work vehicle, the work program for causing one or more processors to execute:
controlling a planting depth of the planting target based on a height of a ground in a work area during automatic travel of the work vehicle; and
switching a planting depth control function that controls the planting depth of the planting target from enabled to disabled when the planting unit reaches a second position on a work path away from a target end position of work on the work path by a second predetermined distance in an opposite direction to a work direction.

### <Additional Note 15>

A work system for harvesting a crop using a harvesting unit provided on a work vehicle, the work system including a control processing unit that executes:
a process of controlling a height of the harvesting unit based on a height of a ground or a crop in a work area during automatic travel of the work vehicle; and
a process of switching a harvest height control function that controls the height of the harvesting unit from disabled to enabled when the harvesting unit reaches a first position on a work path away from a target start position of work on the work path by a first predetermined distance in a work direction.

### <Additional Note 16>

A work system for harvesting a crop using a harvesting unit provided on a work vehicle, the work system including a control processing unit that executes:
a process of controlling a height of the harvesting unit based on a height of a ground or a crop in a work area during automatic travel of the work vehicle; and
a process of switching a harvest height control function that controls the height of the harvesting unit from enabled to disabled when the harvesting unit reaches a second position on a work path away from a target end position of work on the work path by a second predetermined distance in an opposite direction to a work direction.

### <Additional Note 17>

A work system for planting a planting target using a planting unit provided on a work vehicle, the work system including a control processing unit that executes:
a process of controlling a planting depth of the planting target based on a height of a ground in a work area during automatic travel of the work vehicle; and
a process of switching a planting depth control function that controls the planting depth of the planting target from disabled to enabled when the planting unit reaches a first position on a work path away from a target start position of work on the work path by a first predetermined distance in a work direction.

### <Additional Note 18>

A work system for planting a planting target using a planting unit provided on a work vehicle, the work system including a control processing unit that executes:
a process of controlling a planting depth of the planting target based on a height of a ground in a work area during automatic travel of the work vehicle; and
a process of switching a planting depth control function that controls the planting depth of the planting target from enabled to disabled when the planting unit reaches a second position on a work path away from a target end position of work on the work path by a second predetermined distance in an opposite direction to a work direction.

### LIST OF REFERENCE SIGNS

- 10: Automatic traveling system
- 1: Combine (work vehicle)
- 3: Reaping unit (harvesting unit)
- 11: Control device
- 11A: Vehicle control device
- 11B: Reaping control device (control processing unit)
- 30: Operation terminal
- 100: Transplanter (work vehicle)
- 110A: Vehicle control device
- 110B: Planting control device (control processing unit)
- 311: Registration processing unit
- 312: Setting processing unit
- 313: Output processing unit
- A: Ridge
- E1: Control information
- E2: Control information
- F: Field
- R: Target path
- R1n: Work path
- R2a: Turning path
- R2b: Straight path
- R2c: Straight path
- R2d: Turning path

## Claims

1. A work method for harvesting a crop using a harvesting unit provided on a work vehicle, the work method comprising:
controlling a height of the harvesting unit based on a height of a ground or a crop in a work area during automatic travel of the work vehicle; and
switching a harvest height control function that controls the height of the harvesting unit from disabled to enabled when the harvesting unit reaches a first position on a work path away from a target start position of work on the work path by a first predetermined distance in a work direction.

2. The work method according to claim 1, wherein
the harvesting unit is a work implement that harvests a crop on a ridge formed by ridge-making work, and
the height of the harvesting unit from the target start position to the first position is set based on work information during the ridge-making work.

3. A work method for harvesting a crop using a harvesting unit provided on a work vehicle, the work method comprising:
controlling a height of the harvesting unit based on a height of a ground or a crop in a work area during automatic travel of the work vehicle; and
switching a harvest height control function that controls the height of the harvesting unit from enabled to disabled when the harvesting unit reaches a second position on a work path away from a target end position of work on the work path by a second predetermined distance in an opposite direction to a work direction.

4. The work method according to claim 3, wherein
driving of the harvesting unit is stopped when the harvesting unit reaches a fourth position on a non-work path connected to the target end position, the fourth position being away from the target end position by a third predetermined distance in the work direction.

5. The work method according to claim 3 or 4, wherein
the harvesting unit is a work implement that harvests a crop on a ridge formed by ridge-making work, and
the height of the harvesting unit from the second position to the target end position is set to a height when the harvesting unit reaches the second position.

6. A work method for planting a planting target using a planting unit provided on a work vehicle, the work method comprising:
controlling a planting depth of the planting target based on a height of a ground in a work area during automatic travel of the work vehicle; and
switching a planting depth control function that controls the planting depth of the planting target from disabled to enabled when the planting unit reaches a first position on a work path away from a target start position of work on the work path by a first predetermined distance in a work direction.

7. The work method according to claim 6, wherein
the planting unit is a work implement that plants the planting target on a ridge formed by ridge-making work, and
a height of the planting unit from the target start position to the first position is set based on work information during the ridge-making work.

8. A work method for planting a planting target using a planting unit provided on a work vehicle, the work method comprising:
controlling a planting depth of the planting target based on a height of a ground in a work area during automatic travel of the work vehicle; and
switching a planting depth control function that controls the planting depth of the planting target from enabled to disabled when the planting unit reaches a second position on a work path away from a target end position of work on the work path by a second predetermined distance in an opposite direction to a work direction.

9. The work method according to claim 8, wherein
driving of the planting unit is stopped when the planting unit reaches the second position or the target end position.

10. The work method according to claim 8 or 9, wherein
the planting unit is a work implement that plants the planting target on a ridge formed by ridge-making work, and
the height of the planting unit from the second position to the target end position is set to a height when the planting unit reaches the second position.

11. A work program for harvesting a crop using a harvesting unit provided on a work vehicle, the work program for causing one or more processors to execute:
controlling a height of the harvesting unit based on a height of a ground or a crop in a work area during automatic travel of the work vehicle; and
switching a harvest height control function that controls the height of the harvesting unit from disabled to enabled when the harvesting unit reaches a first position on a work path away from a target start position of work on the work path by a first predetermined distance in a work direction.

12. A work program for harvesting a crop using a harvesting unit provided on a work vehicle, the work program for causing one or more processors to execute:
controlling a height of the harvesting unit based on a height of a ground or a crop in a work area during automatic travel of the work vehicle; and
switching a harvest height control function that controls the height of the harvesting unit from enabled to disabled when the harvesting unit reaches a second position on a work path away from a target end position of work on the work path by a second predetermined distance in an opposite direction to a work direction.

13. A work program for planting a planting target using a planting unit provided on a work vehicle, the work program for causing one or more processors to execute:
controlling a planting depth of the planting target based on a height of a ground in a work area during automatic travel of the work vehicle; and
switching a planting depth control function that controls the planting depth of the planting target from disabled to enabled when the planting unit reaches a first position on a work path away from a target start position of work on the work path by a first predetermined distance in a work direction.

14. A work program for planting a planting target using a planting unit provided on a work vehicle, the work program for causing one or more processors to execute:
controlling a planting depth of the planting target based on a height of a ground in a work area during automatic travel of the work vehicle; and
switching a planting depth control function that controls the planting depth of the planting target from enabled to disabled when the planting unit reaches a second position on a work path away from a target end position of work on the work path by a second predetermined distance in an opposite direction to a work direction.

15. A work system for harvesting a crop using a harvesting unit provided on a work vehicle, the work system comprising a control processing unit that executes:
a process of controlling a height of the harvesting unit based on a height of a ground or a crop in a work area during automatic travel of the work vehicle; and
a process of switching a harvest height control function that controls the height of the harvesting unit from disabled to enabled when the harvesting unit reaches a first position on a work path away from a target start position of work on the work path by a first predetermined distance in a work direction.

16. A work system for harvesting a crop using a harvesting unit provided on a work vehicle, the work system comprising a control processing unit that executes:
a process of controlling a height of the harvesting unit based on a height of a ground or a crop in a work area during automatic travel of the work vehicle; and
a process of switching a harvest height control function that controls the height of the harvesting unit from enabled to disabled when the harvesting unit reaches a second position on a work path away from a target end position of work on the work path by a second predetermined distance in an opposite direction to a work direction.

17. A work system for planting a planting target using a planting unit provided on a work vehicle, the work system comprising a control processing unit that executes:
a process of controlling a planting depth of the planting target based on a height of a ground in a work area during automatic travel of the work vehicle; and
a process of switching a planting depth control function that controls the planting depth of the planting target from disabled to enabled when the planting unit reaches a first position on a work path away from a target start position of work on the work path by a first predetermined distance in a work direction.

18. A work system for planting a planting target using a planting unit provided on a work vehicle, the work system comprising a control processing unit that executes:
a process of controlling a planting depth of the planting target based on a height of a ground in a work area during automatic travel of the work vehicle; and
a process of switching a planting depth control function that controls the planting depth of the planting target from enabled to disabled when the planting unit reaches a second position on a work path away from a target end position of work on the work path by a second predetermined distance in an opposite direction to a work direction.
